# EUROPEAN PATENT APPLICATION

(11) **EP 3 726 100 A1**
(43) Date of publication of application: **21.10.2020**
(21) Application number: 18889813.4
(22) Date of filing: 28.11.2018
(51) Int. Cl.: F16J 15/08, F02F 11/00

(54) **GASKET**

(30) Priority: 11.12.2017 JP 2017237195; 25.01.2018 JP 2018010600
(71) Applicant: Ket & Ket Co., Ltd., Nihonmatsu-shi, Fukushima 964-0874 (JP)
(72) Inventor: YOSHINO Nobuo, Nihonmatsu-shi, Fukushima 964-0874 (JP)
(74) Representative: Krause, Martin
(86) International application number: PCT/JP2018/043660
(87) International publication number: WO 2019/116888

(57) **Abstract**

There is provided a gasket with which uniform sealing a space between a cylinder head and a cylinder block may be achieved.

A gasket (1) includes a shim plate (13) that is disposed between a lower base plate (11) and an upper base plate (12). The shim plate (13) includes annular wedge sections (13a) disposed between cylinder-block-side full-bead sections (11a) provided at the lower base plate (11) and cylinder-head-side full-bead sections (12a) provided at the upper base plate (12) respectively, and extending along cylinder head surfaces (21a), and the shim plate (13) includes extended wedge sections (13b) formed extending, from parts, in a circumferential direction, of the wedge sections (13a) positioned on both ends in an arrangement direction of the wedge sections (13a), to outer upper surfaces (32a) of outer walls (32) of the cylinder block (3), which are surfaces defining cooling water channels (60) with bore walls (31).

## Description

### Technical Field

The present invention relates to a gasket, and more particularly, to a gasket to be used in an internal combustion engine of a vehicle, general-purpose equipment or the like.

### Background Art

A gasket is used in an internal combustion engine of a vehicle or general-purpose machinery, such as an automobile, to seal between a cylinder head and a cylinder block. The gasket elastically deforms by being sandwiched between the cylinder head and the cylinder block, and serves to seal the space between the cylinder head and the cylinder block, and for sealing the internal combustion engine (for example, Patent Literature 1).

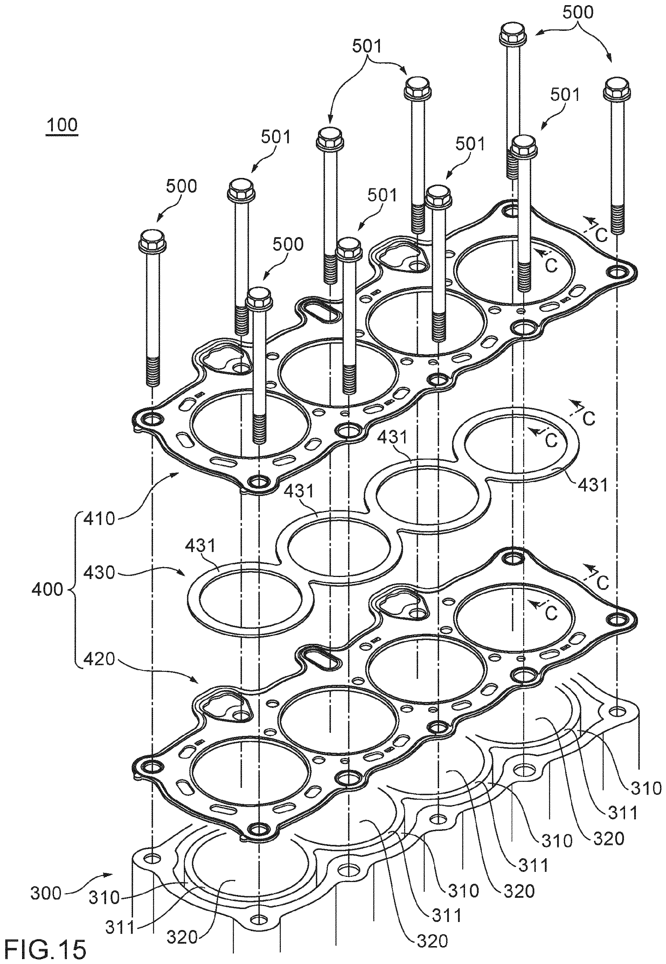

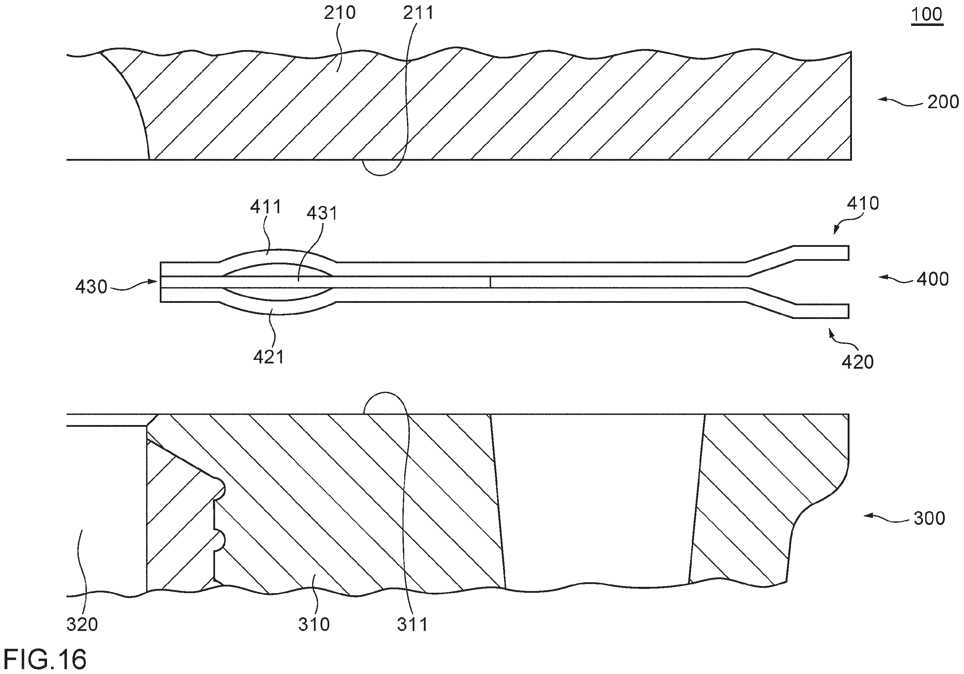

Fig. 15 is a schematic perspective view showing an internal combustion engine with four cylinders that is provided with a gasket of a conventional type, the view showing a state in which a cylinder head is removed. Fig. 16 is a cross-sectional view showing a cross-section along a line C-C in Fig. 15, the view including the cylinder head and a cylinder block. As shown in Figs. 15 and 16, an internal combustion engine 100 includes a cylinder head 200, a cylinder block 300, and a gasket 400.

The cylinder block 300 includes a plurality of bore walls 310 including annular deck surfaces 311 that are surfaces facing the cylinder head 200. As shown in Fig. 15, the bore walls 310 of the cylinder block 300 respectively surround, in an annular manner, bored holes 320 that are serially arranged. The cylinder head 200 includes a base 210 including cylinder head surfaces 211 that are surfaces facing the deck surfaces 311 of the cylinder block 300.

The gasket 400 includes an upper base plate 410 that is disposed on a side of the cylinder head 200 and that includes cylinder-head-side full-bead sections 411 that are annular, a lower base plate 420 that is disposed on a side of the cylinder block 300 and that includes cylinder-block-side full-bead sections 421 that are annular, and a shim plate 430 that includes wedge sections 431 that are annular and that are disposed between the upper base plate 410 and the lower base plate 420.

In the internal combustion engine 100 of a conventional case, the cylinder head 200 and the cylinder block 300 are fastened using a plurality of bolts 500, 501. As shown in Fig. 15, the bolts 500 are four end bolts that are arranged at both ends in an arrangement direction of the bored holes 320, and the bolts 501 are six inner bolts that are arranged between the end bolts 500 in the arrangement direction of the bored holes 320.

At the time the fastening mentioned above takes place, the cylinder-head-side full-bead sections 411, the cylinder-block-side full-bead sections 421, and the wedge sections 431 are superimposed with one another, and are sandwiched between the cylinder head surfaces 211 and the deck surfaces 311. When the wedge sections 431 are sandwiched between the cylinder head surfaces 211 and the deck surfaces 311 in the above manner and are pressed with a great force by the end bolts 500 and the inner bolts 501 due to elastic deformation of the cylinder-head-side full-bead sections 411 and the cylinder-block-side full-bead sections 421, gaps between the cylinder head 200 and the cylinder block 300 generated between the bolts 500, 501 are filled and sealability is secured.

### Document List

### Patent Literature

Patent Literature 1: Japanese Patent Application Publication No. 2001-227410

### Summary of Invention

### Technical Problem

However, when using the gasket 400 of the conventional case, even in a case in which the end bolts 500 and the inner bolts 501 are fastened with the same torque, a pressing deformation force (surface pressure) that is applied to the cylinder head surfaces 211 and the deck surfaces 311 by the end bolts 500 is greater than a pressing deformation force (surface pressure) that is applied by the inner bolts 501.

Accordingly, when the cylinder head 200 and the cylinder block 300 are fastened, the cylinder head 200 is deformed in such a way that gaps between parts of the cylinder head surfaces 211 and parts of the deck surfaces 311 receiving the pressing deformation force from the inner bolts 501 become greater than gaps between parts of the cylinder head surfaces 211 and parts of the deck surfaces 311 receiving the pressing deformation force from the end bolts 500. In this manner, in the case of fastening the cylinder head 200 and the cylinder block 300 using the gasket 400 of the conventional case, gaps between the cylinder head surfaces 211 and the deck surfaces 311 become uneven in the arrangement direction of the bored holes 320, and thus, the gasket 400 of the conventional case does not have a structure that is sufficient to achieve uniform sealing between the cylinder head 200 and the cylinder block 300.

The present invention has been made in view of the problem described above, and an object of the present invention is to provide a gasket with which deformation of a cylinder head in an arrangement direction of bored holes, which may cause gaps between a cylinder head surface and a deck surface of a cylinder block to be uneven, can be suppressed, and with which uniform sealing between the cylinder head and the cylinder block is achievable.

### Solution to Problem

To achieve the object described above, a gasket according to the present invention is a gasket to be attached between a cylinder head and a cylinder block of an internal combustion engine, the gasket being characterized by including: a lower base plate being flat plate-shaped and disposed on a side of the cylinder block; an upper base plate being flat plate-shaped and disposed on a side of the cylinder head; and a shim plate being flat plate-shaped and disposed between the lower base plate and the upper base plate, in which the lower base plate includes cylinder-block-side full-bead sections being annular and corresponding to each of annular deck surfaces of each bore wall of the cylinder block, the upper base plate includes cylinder-head-side full-bead sections being annular, facing the cylinder-block-side full-bead sections, and corresponding to each of cylinder head surfaces, of the cylinder head, facing each of the deck surfaces, the shim plate includes wedge sections being annular, disposed between the cylinder-block-side full-bead sections and the cylinder-head-side full-bead sections respectively, and extending along the cylinder head surfaces, and the shim plate includes extended wedge sections formed extending from parts, in a circumferential direction, of the wedge sections positioned on both ends in an arrangement direction of the wedge sections, to outer upper surfaces of outer walls of the cylinder block, which are surfaces defining cooling water channels having the bore walls.

With the gasket according to an aspect of the present invention, each of the extended wedge sections extend in opposite directions from each other in the arrangement direction of the wedge sections.

With the gasket according to an aspect of the present invention, the lower base plate includes cylinder-block-side cooling-water half-bead sections corresponding to the outer upper surfaces of the cylinder block, the upper base plate includes cylinder-head-side cooling-water half-bead sections facing the cylinder-block-side cooling-water half-bead sections, and corresponding to outer lower surfaces, of the cylinder head, that are surfaces facing the outer upper surfaces, and the extended wedge sections are formed so that they do not reach the cylinder-block-side cooling-water half-bead sections and the cylinder-head-side cooling-water half-bead sections.

With the gasket according to an aspect of the present invention, a bead height in the upward and downward direction at certain parts of the cylinder-block-side cooling-water half-bead sections and the cylinder-head-side cooling-water half-bead sections, where the extended wedge sections are disposed is greater than a bead height at parts where the extended wedge sections are not disposed.

With the gasket according to an aspect of the present invention, the extended wedge sections are integrally formed with the wedge sections.

The gasket according to an aspect of the present invention further includes a middle plate being flat plate-shaped and disposed between the lower base plate and the shim plate.

With the gasket according to an aspect of the present invention, the extended wedge sections are separate from the wedge sections, and the extended wedge sections have a thickness that is different from the thickness of the wedge sections.

A gasket according to the present invention is a gasket to be attached between a cylinder head and a cylinder block of an internal combustion engine, the gasket being characterized by including: a lower base plate being flat plate-shaped and disposed on a side of the cylinder block; an upper base plate being flat plate-shaped and disposed on a side of the cylinder head; a shim plate being flat plate-shaped and disposed between the lower base plate and the upper base plate; and stopper plates being separate from the shim plate, and disposed between the lower base plate and the upper base plate, in which the lower base plate includes cylinder-block-side full-bead sections being annular and formed to face annular deck surfaces of each bore wall of the cylinder block, the upper base plate includes cylinder-head-side full-bead sections being annular and formed to face cylinder head surfaces of the cylinder head, which are surfaces facing each deck surface, the shim plate includes wedge sections that are annular and positioned between the cylinder-block-side full-bead sections and the cylinder-head-side full-bead sections respectively, and the stopper plates are disposed away from the shim plate, at positions facing each other in an arrangement direction of the wedge sections on outer upper surfaces of outer walls, of the cylinder block, that are surfaces defining cooling water channels with the bore walls.

With the gasket according to an aspect of the present invention, the lower base plate includes cylinder-block-side cooling-water half-bead sections extending in a manner facing the outer upper surfaces of the cylinder block, the upper base plate includes cylinder-head-side cooling-water half-bead sections extending in a manner facing outer lower surfaces of the cylinder head, which are surfaces facing the outer upper surfaces, and the stopper plates are attached to at least one of the lower base plate and the upper base plate, on sides further out than the cylinder-block-side cooling-water half-bead sections and the cylinder-head-side cooling-water half-bead sections.

The gasket according to an aspect of the present invention further includes a middle plate being flat plate-shaped and disposed between the lower base plate and the shim plate, where the lower base plate includes cylinder-block-side cooling-water half-bead sections extending in a manner facing the outer upper surfaces of the cylinder block, the upper base plate includes cylinder-head-side cooling-water half-bead sections extending in a manner facing outer lower surfaces, of the cylinder head, that are surfaces facing the outer upper surfaces, and the stopper plates are attached to at least one of a side, of the middle plate, facing the upper base plate and a side, of the middle plate, facing the lower base plate, on sides further out than the cylinder-block-side cooling-water half-bead sections and the cylinder-head-side cooling-water half-bead sections.

With the gasket according to an aspect of the present invention, the lower base plate includes cylinder-block-side cooling-water half-bead sections extending in a manner facing the outer upper surfaces of the cylinder block, the upper base plate includes cylinder-head-side cooling-water half-bead sections extending in a manner facing outer lower surfaces of the cylinder head, which are surfaces facing the outer upper surfaces, and the stopper plates are fixed to the upper base plate and the lower base plate by crimping, on sides further out than the cylinder block and the cylinder head.

With the gasket according to an aspect of the present invention, the lower base plate includes cylinder-block-side cooling-water half-bead sections extending in a manner facing the outer upper surfaces of the cylinder block, the upper base plate includes cylinder-head-side cooling-water half-bead sections extending in a manner facing outer lower surfaces, of the cylinder head, that are surfaces facing the outer upper surfaces, and the stopper plates are fixed to the lower base plate by crimping, at positions facing the cooling water channels.

A gasket according to the present invention is a gasket to be attached between a cylinder head and a cylinder block of an internal combustion engine, the gasket being characterized by including: a lower base plate being flat plate-shaped and disposed on a side of the cylinder block; an upper base plate being flat plate-shaped and disposed on a side of the cylinder head; and a shim plate being flat plate-shaped and disposed between the lower base plate and the upper base plate, in which the lower base plate includes cylinder-block-side full-bead sections being annular and formed to face annular deck surfaces of each bore wall of the cylinder block, the upper base plate includes cylinder-head-side full-bead sections being annular and formed to face cylinder head surfaces of the cylinder head, which are surfaces facing the each deck surface, the shim plate includes folded wedge sections being annular, and located around bored holes defined by the bore walls, and extended shim plate sections being integrally formed with the folded wedge sections, in a circumferential direction of the folded wedge sections, in a manner extending to outer upper surfaces of outer walls of the cylinder block, which are surfaces defining cooling water channels, the folded wedge sections include parts positioned between each of the cylinder-block-side full-bead sections and the cylinder-head-side full-bead sections, and the extended shim plate sections include outer folded stopper sections being folded back at the outer side end portions in the direction the folded wedge sections are arranged.

With the gasket according to an aspect of the present invention, the lower base plate includes cylinder-block-side cooling-water half-bead sections extending in a manner facing the outer upper surfaces of the cylinder block, the upper base plate includes cylinder-head-side cooling-water half-bead sections extending in a manner facing outer lower surfaces, of the cylinder head, that are surfaces facing the outer upper surfaces, and the outer folded stopper sections are disposed between the outer upper surfaces and the outer lower surfaces of the cylinder head, which are surfaces facing the outer upper surfaces, on sides further out than the cylinder-block-side cooling-water half-bead sections and the cylinder-head-side cooling-water half-bead sections.

### Effects of Invention

With a gasket according to the present invention, deformation of a cylinder head in an arrangement direction of bored holes, which may cause gaps between cylinder head surfaces and deck surfaces of a cylinder block to be uneven, is capable of being suppressed, and uniform sealing between the cylinder head and the cylinder block is achievable.

### Brief Description of Drawings

[Fig. 1] A schematic perspective view showing an internal combustion engine with four cylinders that is provided with a gasket according to a first embodiment of the present invention, the view showing a state in which a cylinder head is removed.
[Fig. 2] A cross-sectional view showing a cross-section along a line A-A in Fig. 1, the view including the cylinder head and a cylinder block.
[Fig. 3] A cross-sectional view showing a cross-section along a line B-B in Fig. 1, the view including the cylinder head and the cylinder block.
[Fig. 4] A cross-sectional view showing a cross-section of an internal combustion engine that is provided with a gasket according to a variation of the first embodiment of the present invention, the view including a cylinder head and a cylinder block.
[Fig. 5] A cross-sectional view showing a cross-section of an internal combustion engine that is provided with a gasket according to a further variation of the first embodiment of the present invention, the view including a cylinder head and a cylinder block.
[Fig. 6] A schematic perspective view showing an internal combustion engine with four cylinders that is provided with a gasket according to a second embodiment of the present invention, the view showing a state in which a cylinder head is removed.
[Fig. 7] A cross-sectional view showing a cross-section along a line A-A in Fig. 6, the view including the cylinder head and a cylinder block.
[Fig. 8] A cross-sectional view showing a cross-section along a line B-B in Fig. 6, the view including the cylinder head and the cylinder block.
[Fig. 9] A cross-sectional view showing a cross-section of an internal combustion engine that is provided with a gasket according to a variation of the second embodiment of the present invention, the view including a cylinder head and a cylinder block.
[Fig. 10] A cross-sectional view showing a cross-section of the internal combustion engine that is provided with the gasket according to the variation of the second embodiment of the present invention, the view including the cylinder head and the cylinder block.
[Fig. 11] A cross-sectional view showing a cross-section of an internal combustion engine that is provided with a gasket according to a further variation of the second embodiment of the present invention, the view including a cylinder head and a cylinder block.
[Fig. 12] A cross-sectional view showing a cross-section of an internal combustion engine that is provided with a gasket according to a further variation of the second embodiment of the present invention, the view including a cylinder head and a cylinder block.
[Fig. 13] A cross-sectional view showing a cross-section of an internal combustion engine that is provided with a gasket according to a third embodiment of the present invention, the view including a cylinder head and a cylinder block.
[Fig. 14] A schematic perspective view showing a shim plate of the gasket according to the third embodiment of the present invention.
[Fig. 15] A schematic perspective view showing an internal combustion engine with four cylinders that is provided with a gasket of a conventional case, the view showing a state in which a cylinder head is removed.
[Fig. 16] A cross-sectional view showing a cross-section along a line C-C in Fig. 15, the view including the cylinder head and a cylinder block.

### Description of Embodiments

Hereinafter, embodiments of the present invention will be described with reference to the drawings.

### <First Embodiment>

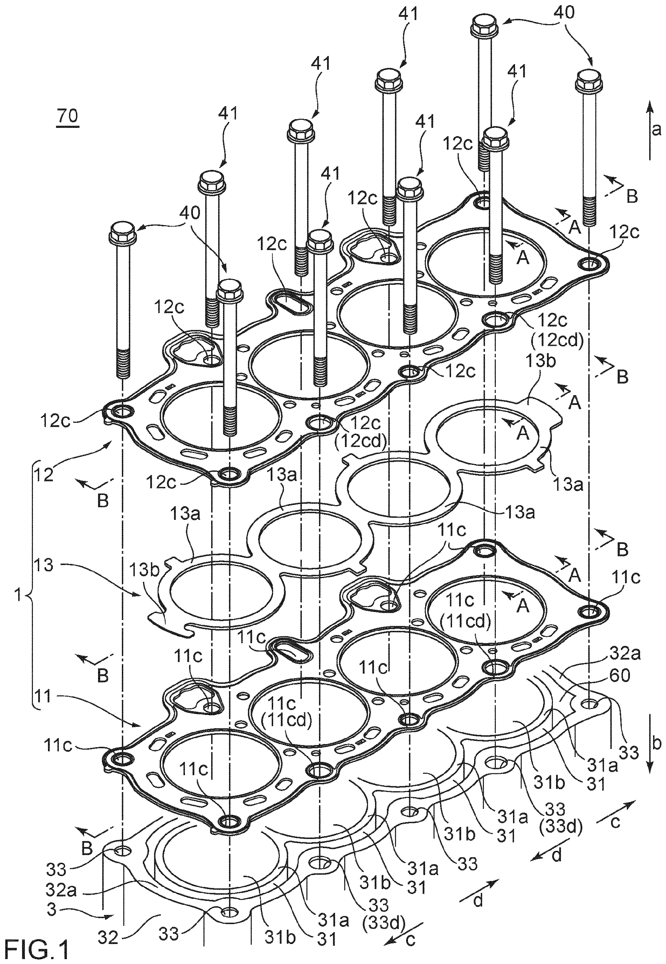

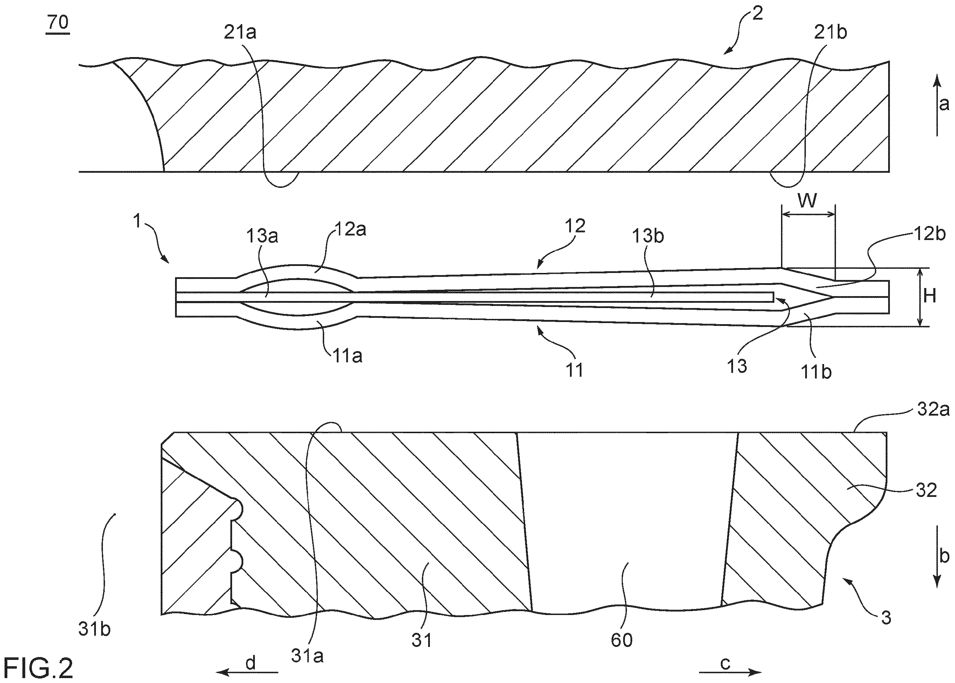

Fig. 1 is a schematic perspective view showing an internal combustion engine 70 with four cylinders that is provided with a gasket 1 according to a first embodiment of the present invention, the view showing a state in which a cylinder head 2 is removed, and Fig. 2 is a cross-sectional view showing a cross-section along a line A-A in Fig. 1, the view including the cylinder head 2 and a cylinder block 3.

Here, in the following description, an upper side or an upward direction (an arrow a direction in Figs. 1, 2) is a side or a direction where the cylinder head 2 is provided with respect to the internal combustion engine 70, and a lower side or a downward direction (an arrow b direction in Figs. 1, 2) is a side or a direction where the cylinder block 3 is provided with respect to the internal combustion engine 70. Furthermore, outer sides or outward directions (arrow c directions in Figs. 1, 2) are sides of, or directions toward, outer parts of the cylinder block 3 in an arrangement direction of bored holes 31b of the cylinder block 3 described later, and inner sides or inward directions (arrow d directions in Figs. 1, 2) are sides of, or directions toward, inner parts of the cylinder block 3 in the arrangement direction of the bored holes 31b.

As shown in Figs. 1, 2, the gasket 1 according to the first embodiment is to be attached between the cylinder head 2 and the cylinder block 3 of the internal combustion engine 70. The gasket 1 includes a lower base plate 11 that is flat plate-shaped and that is disposed on a side of the cylinder block 3, an upper base plate 12 that is flat plate-shaped and that is disposed on a side of the cylinder head 2, and a shim plate 13 that is flat plate-shaped and that is disposed between the lower base plate 11 and the upper base plate 12.

The lower base plate 11 includes cylinder-block-side full-bead sections 11a that are annular and that correspond to each of the annular deck surfaces 31a of each of bore walls 31 of the cylinder block 3. Furthermore, as shown in Fig. 2, the lower base plate 11 includes cylinder-block-side cooling-water half-bead sections 11b corresponding to outer upper surfaces 32a of the cylinder block 3. Specifically, the cylinder-block-side full-bead section 11a is formed in a direction of protruding from the shim plate 13 (downward direction) so as to apply a predetermined surface pressure to the deck surface 31a of the cylinder block 3 in a usage state described later. Additionally, the cylinder-block-side full-bead section 11a may alternatively be formed in a direction approaching the shim plate 13 (upward direction) so as to apply a predetermined surface pressure to the deck surface 31a during use. Furthermore, the cylinder-block-side cooling-water half-bead section 11b is formed in a direction protruding from the shim plate 13 (downward direction) so as to apply a predetermined surface pressure to the outer upper surface 32a of the cylinder block 3 in the usage state described later.

The upper base plate 12 includes cylinder-head-side full-bead sections 12a that are annular and that face the cylinder-block-side full-bead sections 11a, the cylinder-head-side full-bead sections 12a corresponding to each of cylinder head surfaces 21a of the cylinder head 2, which are surfaces facing each of deck surfaces 31a. Furthermore, the upper base plate 12 includes cylinder-head-side cooling-water half-bead sections 12b that face the cylinder-block-side cooling-water half-bead sections 11b and that correspond to outer lower surfaces 21b, of the cylinder head 2, which are surfaces that face the outer upper surfaces 32a. Specifically, the cylinder-head-side full-bead section 12a is formed in a direction protruding from the shim plate 13 (upward direction) so as to apply a predetermined surface pressure to the cylinder head surface 21a in the usage state described later. Additionally, the cylinder-head-side full-bead section 12a may alternatively be formed in a direction approaching the shim plate 13 (downward direction) so as to apply a predetermined surface pressure to the cylinder head surface 21a in the usage state. Furthermore, the cylinder-head-side cooling-water half-bead section 12b is formed in a direction protruding from the shim plate 13 (upward direction) so as to apply a predetermined surface pressure to the outer lower surface 21b of the cylinder head 2 in the usage state described later.

The shim plate 13 includes wedge sections 13a that are annular and that extend along the cylinder head surfaces 21a, the wedge sections 13a being disposed between the cylinder-block-side full-bead section 11a and the cylinder-head-side full-bead section 12a respectively. The shim plate 13 includes extended wedge sections 13b that are formed extending, from parts, in a circumferential direction, of the wedge sections 13a that are positioned on both ends (outer sides in Fig. 1) in an arrangement direction of the wedge sections 13a, to the outer upper surfaces 32a of outer walls 32, of the cylinder block 3, that define cooling water channels 60 with the bore walls 31.

The extended wedge sections 13b extend in outward directions from parts, in the circumferential direction, of the wedge sections 13a, and for example, each of the extended wedge sections 13b preferably extend in opposite directions from each other in the arrangement direction of the wedge sections 13a. Furthermore, the extended wedge sections 13b are preferably formed so that they do not reach the cylinder-block-side cooling-water half-bead sections 11b and the cylinder-head-side cooling-water half-bead sections 12b. The extended wedge sections 13b may be integrally formed with the wedge sections 13a.

As shown in Fig. 2, a bead height H in a vertical direction at a part, of the cylinder-block-side cooling-water half-bead section 11b and the cylinder-head-side cooling-water half-bead section 12b, where the extended wedge section 13b is disposed is preferably greater than a bead height at a part where the extended wedge section 13b is not disposed. Furthermore, the cylinder-block-side cooling-water half-bead section 11b and the cylinder-head-side cooling-water half-bead section 12b may be formed in width W to be smaller at a part where the extended wedge section 13b is disposed, than a bead width (not shown) at a part where the extended wedge section 13b is not disposed.

Specifically, as shown in Fig. 2, the gasket 1 is formed in such a way that, in the usage state described later, the cylinder-block-side full-bead section 11a and the cylinder-head-side full-bead section 12a are sandwiched between the cylinder head surface 21a and the deck surface 31a along entire peripheries, and also, the cylinder-block-side cooling-water half-bead section 11b and the cylinder-head-side cooling-water half-bead section 12b described later are sandwiched between the outer lower surface 21b and the outer upper surface 32a along entire peripheries.

Specifically, as shown in Fig. 2, in a natural state in which no load is applied, the lower base plate 11 is a member having a plate shape with a constant or substantially constant thickness, extending from an end portion, located on an outer side, of the cylinder-block-side full-bead section 11a toward the outer wall 32 of the cylinder block 3, and bending and extending in a sloped manner at a position corresponding to the outer upper surface 32a of the outer wall 32. The lower base plate 11 forms the cylinder-block-side cooling-water half-bead section 11b at a position corresponding to the outer upper surface 32a. Furthermore, as shown in Fig. 1, a plurality of lower insertion holes 11c where bolts 40, 41, described later, are to be respectively inserted through are formed in the lower base plate 11. Additionally, as shown in Fig. 1, the bolts 40 are four end bolts that are arranged at both ends (outer sides) in the arrangement direction of the bored holes 31b, and the bolts 41 are six inner bolts that are arranged between the end bolts 40 in the arrangement direction of the bored hole 31b.

Specifically, as shown in Fig. 2, in the natural state in which no load is applied, the upper base plate 12 is a member having a plate shape with a constant or substantially constant thickness, extending from an end portion located on an outer side of the cylinder-head-side full-bead section 12a toward a side of the outer lower surface 21b of the cylinder head 2, and bending and extending in a sloped manner at a position corresponding to the outer lower surface 21b of the cylinder head 2. The upper base plate 12 forms the cylinder-head-side cooling-water half-bead section 12b at a position corresponding to the outer lower surface 21b. Furthermore, as shown in Fig. 1, a plurality of upper insertion holes 12c where the end bolts 40 and the inner bolts 41, described later are to be respectively inserted through are formed in the upper base plate 12.

Specifically, as shown in Fig. 2, the extended wedge section 13b preferably extends in front of the cylinder-block-side cooling-water half-bead section 11b and the cylinder-head-side cooling-water half-bead section 12b, on the outer upper surface 32a of the cylinder block 3. That is, the extended wedge section 13b is formed such that the extended wedge section 13b is not sandwiched between the cylinder-block-side cooling-water half-bead section 11b and the cylinder-head-side cooling-water half-bead section 12b in the usage state of the gasket 1 described later. For example, as shown in Fig. 1, the extended wedge section 13b may be a member having a substantially rectangular shape and extending in the outward direction while having a constant or substantially constant circumferential direction length along a circumferential direction of the wedge section 13a (see the extended wedge section 13b on the upper side in Fig. 1). Furthermore, the extended wedge section 13b may be a member having a shape, a circumferential direction length of which along the circumferential direction of the wedge section 13a changes in the outward direction (see the extended wedge section 13b on the lower side in Fig. 1). Additionally, shapes of the extended wedge sections 13b are not limited to the above, and may be in accordance with a shape of the cooling water channel 60, for example.

Next, effects of the gasket 1 according to the first embodiment will be described. As shown in Fig. 2, the gasket 1 is locked by a predetermined method (for example, by crimping) in an integrated manner in a superimposed state in which the shim plate 13 is sandwiched between the lower base plate 11 and the upper base plate 12. At this time, the shim plate 13 is disposed between the lower base plate 11 and the upper base plate 12 in such a way that each of the wedge sections 13a of the shim plate 13 is disposed between the cylinder-block-side full-bead section 11a and the cylinder-head-side full-bead section 12a, and each of the extended wedge sections 13b of the shim plate 13 does not reach the cylinder-block-side cooling-water half-bead section 11b and the cylinder-head-side cooling-water half-bead section 12b.

The gasket 1 that is integrated in such a manner is placed on a predetermined position on the cylinder block 3. Specifically, as shown in Figs. 1, 2, the gasket 1 is placed on the cylinder block 3 in such a way that the cylinder-block-side cooling-water half-bead section 11b is disposed on the outer upper surface 32a of the cylinder block 3, each of the cylinder-block-side full-bead sections 11a is disposed on the respective deck surface 31a of the bore wall 31, and furthermore, each of the lower insertion holes 11c and the upper insertion holes 12c communicates with a respective bolt hole 33 formed in the outer upper surface 32a of the cylinder block 3. At this time, positioning of the gasket 1 with respect to the cylinder block 3 is performed by inserting dowel pins (not shown) in advance into two bolt holes 33d (see Fig. 1) among the bolt holes 33 of the cylinder block 3 and the dowel pins penetrating respective lower insertion holes 11cd and upper insertion holes 12cd corresponding to the respective bolt holes 33d.

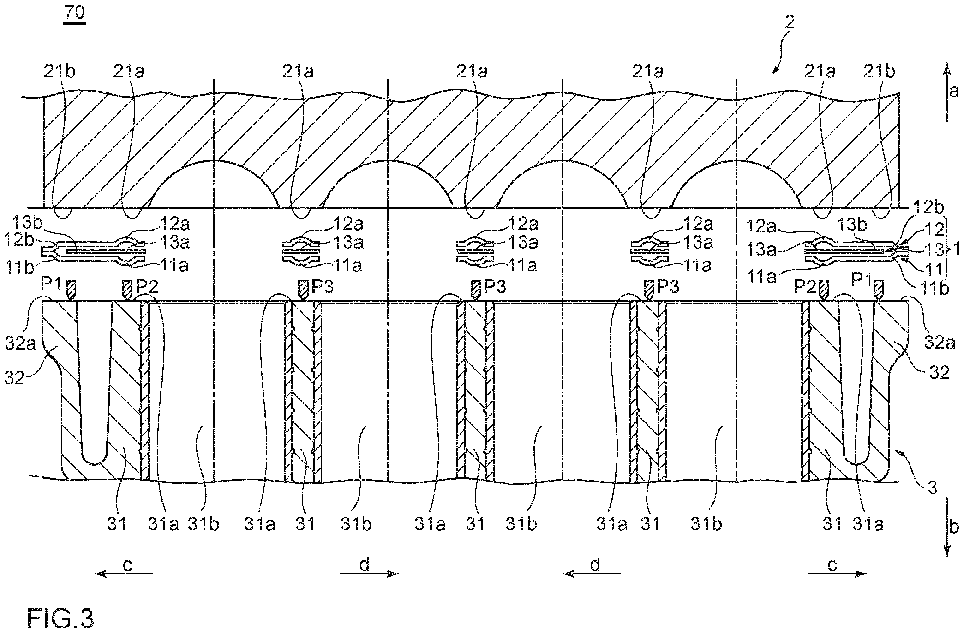

Now, Fig. 3 is a cross-sectional view showing a cross-section along a line B-B in Fig. 1, the view including the cylinder head 2 and the cylinder block 3. As described above, in the state in which the gasket 1 is placed on the cylinder block 3, each of the end bolts 40 and the inner bolts 41 is caused to penetrate a predetermined bolt hole, not shown in Fig. 1, provided in the cylinder head 2, the upper insertion hole 12c in the upper base plate 12, and the lower insertion hole 11c in the lower base plate 11, and is caused to be screwed with an internal thread formed in the bolt hole 33 of the cylinder block 3. In this manner, the cylinder head 2 and the cylinder block 3 are fastened, the cylinder-head-side full-bead section 12a, the cylinder-block-side full-bead section 11a, and the wedge section 13a are elastically deformed between the cylinder head surface 21a and the deck surface 31a, and the cylinder-head-side cooling-water half-bead section 12b, the cylinder-block-side cooling-water half-bead section 11b, and the extended wedge section 13b are elastically deformed between the outer upper surface 32a and the outer lower surface 21b, and a gap between the cylinder head 2 and the cylinder block 3 is thus filled for securing sealability.

In the case in which the end bolts 40 and the inner bolts 41 are fastened with the same torque as described above, a pressing deformation force (surface pressure) that is applied to the cylinder block 3 by the inner bolts 41 is mostly applied to parts corresponding to the deck surfaces 31a that are positioned on an inner side in the arrangement direction of the bored holes 31b (see P3 in Fig. 3). On the other hand, because the extended wedge sections 13b of the shim plate 13 extend to the outer upper surfaces 32a of the cylinder block 3, a pressing deformation force (surface pressure) that is applied to the cylinder block 3 by the end bolts 40 is mostly applied to the deck surfaces 31a that are positioned at both ends (outer sides) in the arrangement direction of the bored holes 31b (see P2 in Fig. 3) and the outer upper surfaces 32a of the cylinder block 3 (see P1 in Fig. 3).

In this manner, by using the gasket 1, the pressing deformation forces P1 to P3 that are applied by the end bolts 40 and the inner bolts 41 are borne respectively by the deck surfaces 31a, the cylinder head surfaces 21a, the outer upper surfaces 32a, and the outer lower surfaces 21b. Accordingly, when the cylinder head 2 and the cylinder block 3 are fastened, uneven deformation of the cylinder head 2 in the arrangement direction of the bored holes 31b, which may cause a gap between the deck surface 31a and the cylinder head surface 21a receiving the pressing deformation force P3 from the inner bolt 41 to become greater than a gap between the deck surface 31a and the cylinder head surface 21a receiving the pressing deformation force P2 from the end bolt 40 and a gap between the outer upper surface 32a and the outer lower surface 21b receiving the pressing deformation force P1 from the end bolt 40, is capable of being suppressed, and uniform sealing between the cylinder head 2 and the cylinder block 3 is achievable.

Furthermore, during use of the gasket 1, each of the extended wedge sections 13b extend in opposite directions from each other in the arrangement direction of the wedge sections 13a, and thus, the pressing deformation forces P1 to P3 applied by the end bolts 40 and the inner bolts 41 are uniformly bearable, in the arrangement direction of the wedge sections 13a, by each of the deck surfaces 31a, each of the cylinder head surfaces 21a, each of the outer upper surfaces 32a, and each of the outer lower surfaces 21b. Accordingly, uneven deformation of the cylinder head 2 in the arrangement direction of the bored holes 31b is further capable of being suppressed, and uniform sealing is more capable of being achieved between the cylinder head 2 and the cylinder block 3.

Furthermore, the extended wedge section 13b of the shim plate 13 is formed so that they do not reach the cylinder-block-side cooling-water half-bead section 11b and the cylinder-head-side cooling-water half-bead section 12b, therefore certain elastic deformation across the entire cylinder-block-side cooling-water half-bead section 11b and cylinder-head-side cooling-water half-bead section 12b can be secured, and appropriate sealing is achievable between the outer upper surface 32a of the cylinder block 3 and the outer lower surface 21b of the cylinder head 2.

Furthermore, the gasket 1 is formed in such a way that, in the natural state in which no load is applied, the bead height H (see Fig. 2) in upward and downward (vertical) direction at the part of the cylinder-block-side cooling-water half-bead section 11b and the cylinder-head-side cooling-water half-bead section 12b, where the extended wedge section 13b is disposed is greater than the bead height at the part where the extended wedge section 13b is not disposed. In this manner, the cylinder-block-side cooling-water half-bead section 11b and the cylinder-head-side cooling-water half-bead section 12b are formed in such a way that the bead height H is increased according to the extended wedge section 13b, and thus, in the usage state of the gasket 1, desired elastic deformation can be secured across the entire cylinder-block-side cooling-water half-bead section 11b and cylinder-head-side cooling-water half-bead section 12b, and appropriate sealing is more attainable between the outer upper surface 32a of the cylinder block 3 and the outer lower surface 21b of the cylinder head 2.

Furthermore, the cylinder-block-side cooling-water half-bead section 11b and the cylinder-head-side cooling-water half-bead section 12b are formed in such a way that the bead width W (see Fig. 2) is reduced according to the extended wedge section 13b, and thus, in the usage state of the gasket 1, desired elastic deformation can be secured across the entire cylinder-block-side cooling-water half-bead section 11b and cylinder-head-side cooling-water half-bead section 12b, and appropriate sealing is more attainable between the outer upper surface 32a of the cylinder block 3 and the outer lower surface 21b of the cylinder head 2.

In this manner, with the gasket 1 according to the first embodiment of the present invention, deformation of the cylinder head 2 in the arrangement direction of the bored holes 31b, which may cause the gaps between the deck surfaces 31a and the cylinder head surfaces 21a to be uneven, is capable of being suppressed, and uniform sealing between the cylinder head 2 and the cylinder block 3 is achievable.

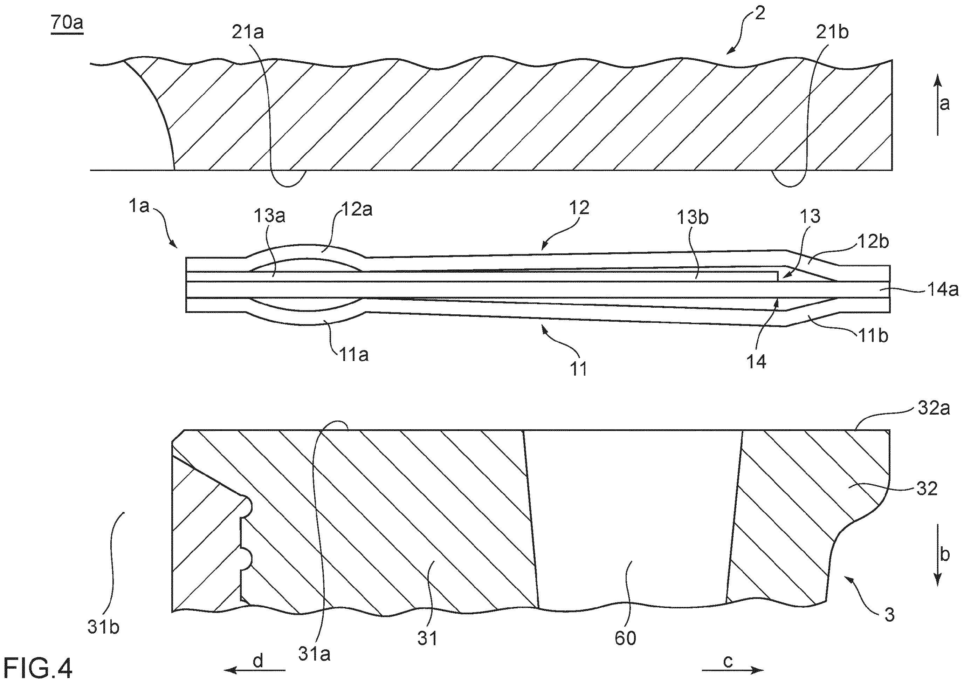

Next, a gasket 1a according to a variation of the first embodiment of the present invention will be described with reference to Fig. 4. Fig. 4 is a cross-sectional view showing a cross-section of an internal combustion engine 70a that is provided with the gasket 1a according to the variation of the first embodiment of the present invention, the view including the cylinder head 2 and the cylinder block 3.

The gasket 1a includes a middle plate 14 that is flat plate-shaped and that is disposed between the lower base plate 11 and the shim plate 13. Additionally, the middle plate 14 may alternatively be disposed between the upper base plate 12 and the shim plate 13. The middle plate 14 is a member that is formed into a substantially identical shape as the lower base plate 11 and the upper base plate 12, and includes as appropriate, according to structures of the lower base plate 11 and the upper base plate 12, holes for bolts, not shown, corresponding to the lower insertion holes 11c and the upper insertion holes 12c, holes for oil, holes for cooling water, and so on. A structure of the middle plate 14 itself is already known, and a detailed description thereof is omitted.

The middle plate 14 includes an edge section 14a that is formed to be sandwiched between the lower base plate 11 and the upper base plate 12 in an assembled state of the gasket 1a. A thickness of the middle plate 14 may be greater, smaller, the same or substantially the same as a thickness of the lower base plate 11 and the upper base plate 12.

As described above, with the gasket 1a according to the variation of the first embodiment of the present invention, the middle plate 14 having a predetermined thickness is provided in addition to the extended wedge section 13b of the shim plate 13, and thus, an appropriate thickness of the gasket 1a is capable of being secured according to the gap between the cylinder head 2 and the cylinder block 3. Accordingly, even in a case in which the gap between the cylinder head 2 and the cylinder block 3 is changed due to a change in shapes or the like of the cylinder head 2 and the cylinder block 3, deformation of the cylinder head 2 in the arrangement direction of the bored holes 31b, which may cause the gaps between the deck surfaces 31a and the cylinder head surfaces 21a to be uneven, can be suppressed, and uniform sealing between the cylinder head 2 and the cylinder block 3 is achievable.

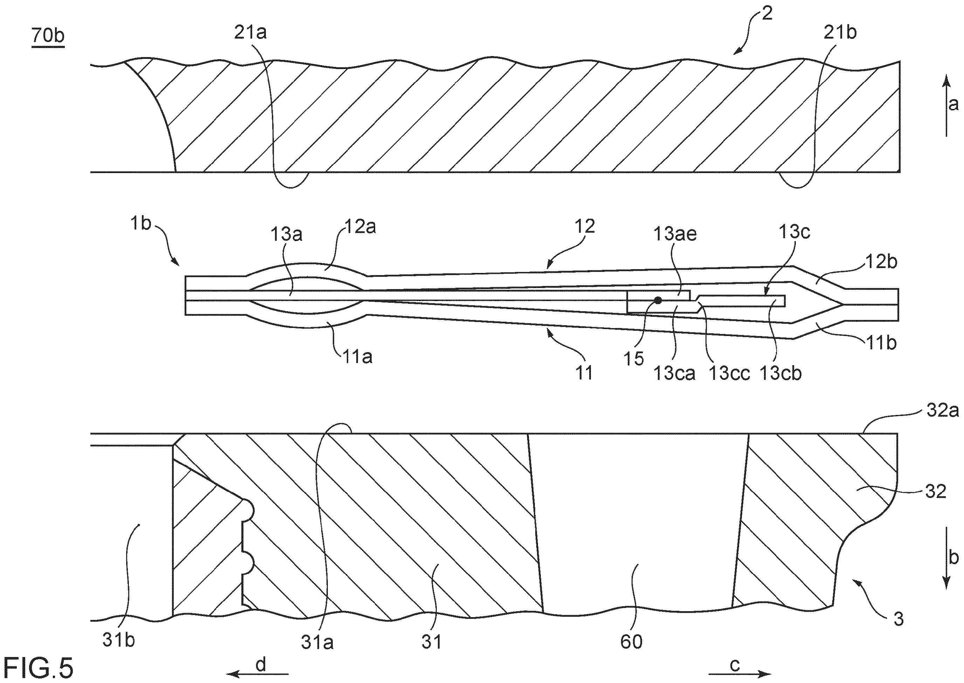

Next, a gasket 1b according to a further variation of the first embodiment of the present invention will be described with reference to Fig. 5. Fig. 5 is a cross-sectional view showing a cross-section of an internal combustion engine 70b that is provided with the gasket 1b according to the other example modification of the first embodiment of the present invention, the view including the cylinder head 2 and the cylinder block 3.

The gasket 1b includes an extended wedge section 13c that is separate from the wedge section 13a, and the extended wedge section 13c has a thickness that is different from the thickness of the wedge section 13a. Additionally, the thickness of the extended wedge section 13c is preferably greater than the thickness of the wedge section 13a.

The extended wedge section 13c includes an inner flat plate section 13ca that extends in a flat plate shape and that is fixed to an edge section 13ae which is an end portion, on an outer side, of the wedge section 13a, by spot welding 15 or the like, an outer flat plate section 13cb that extends in a flat plate shape on the upper side and the outer side relative to the inner flat plate section 13ca, and a step section 13cc that connects the inner flat plate section 13ca and the outer flat plate section 13cb. Additionally, the shape of the extended wedge section 13c is not limited to the above, and for example, the extended wedge section 13c may be formed without including the step section 13cc, and with the inner flat plate section 13ca and the outer flat plate section 13cb being flush or substantially flush with each other.

As described above, with the gasket 1b according to the other example modification of the first embodiment of the present invention, the extended wedge section 13c is provided separately from the wedge section 13a of the shim plate 13, and thus, the extended wedge section 13c may be formed to have a thickness different from the thickness of the wedge section 13a. It is particularly preferable to make the thickness of the extended wedge section 13c greater than the thickness of the wedge section 13a; this enables an amount of elastic deformation of the extended wedge section 13c to be changed according to the thickness of the extended wedge section 13c, and the pressing deformation force (PI in Fig. 3) that is applied to the outer upper surface 32a of the cylinder block 3 by the end bolt 40 can thereby be reduced. Accordingly, excessive application of the pressing deformation force P1 from the end bolt 40 to the outer upper surface 32a of the cylinder block 3 may be suppressed, and deformation of the cylinder head 2 in the arrangement direction of the bored holes 31b, which may cause the gaps between the deck surfaces 31a and the cylinder head surfaces 21a to be uneven, is capable of being suppressed, and uniform sealing between the cylinder head 2 and the cylinder block 3 is achievable.

Next, other effects that can be obtained by the gaskets 1, 1a, 1b according to the first embodiment of the present invention will be described.

As shown in Fig. 3, with the gaskets 1, 1a, 1b according to the first embodiment of the present invention, the pressing deformation forces PI, P2 applied by the end bolts 40 are uniformly bearable by each of the deck surfaces 31a, each of the cylinder head surfaces 21a, each of the outer upper surfaces 32a, and each of the outer lower surfaces 21b, and thus, concentrated application of the pressing deformation forces PI, P2 by the end bolts 40 to the deck surfaces 31a of the bore walls 31 positioned on both ends in the arrangement direction of the bored holes 31b can be avoided. Accordingly, the deck surfaces 31a of the bore walls 31 positioned on both ends in the arrangement direction of the bored holes 31b can be prevented from being tilted inward (arrow d directions) by the pressing deformation forces PI, P2 from the end bolts 40. Accordingly, inner diameters of the bored holes 31b may be maintained uniform in the vertical direction, and an increase in friction between pistons sliding inside the bored holes 31b and the bore walls 31 can be suppressed.

Furthermore, with the gaskets 1, 1a, 1b according to the first embodiment of the present invention, deformation of the cylinder head 2 in the arrangement direction of the bored holes 31b, which may cause the gaps between the deck surfaces 31a and the cylinder head surfaces 21a to be uneven, may be suppressed, and thus, coaxiality may be secured for a plurality of insertion holes for camshafts, not shown, formed in the cylinder head 2. Accordingly, an increase in sliding resistance when driving the camshafts may be suppressed.

### <Second Embodiment>

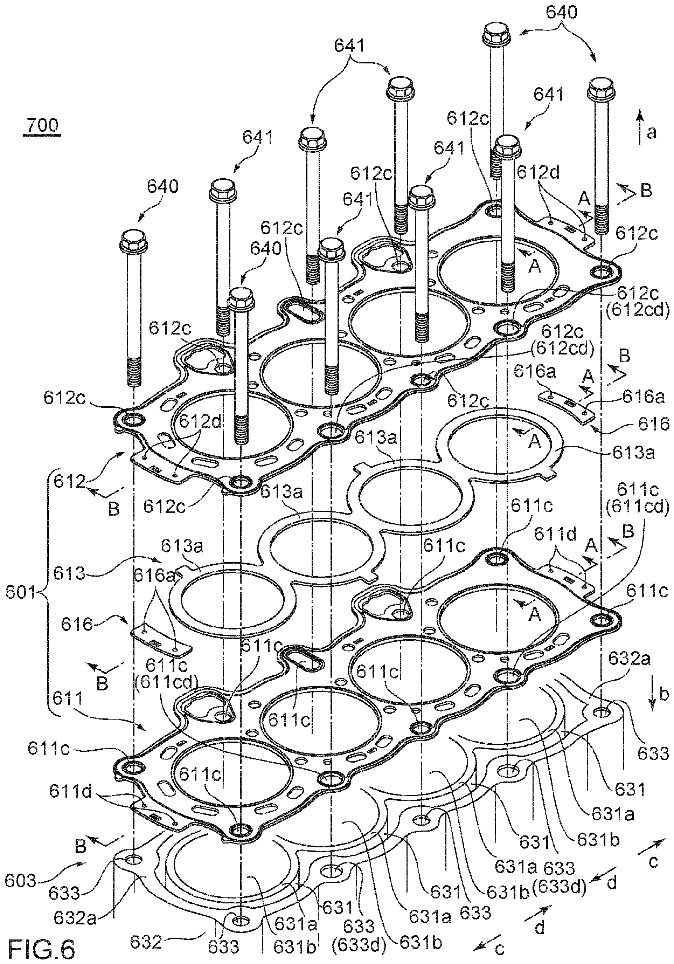

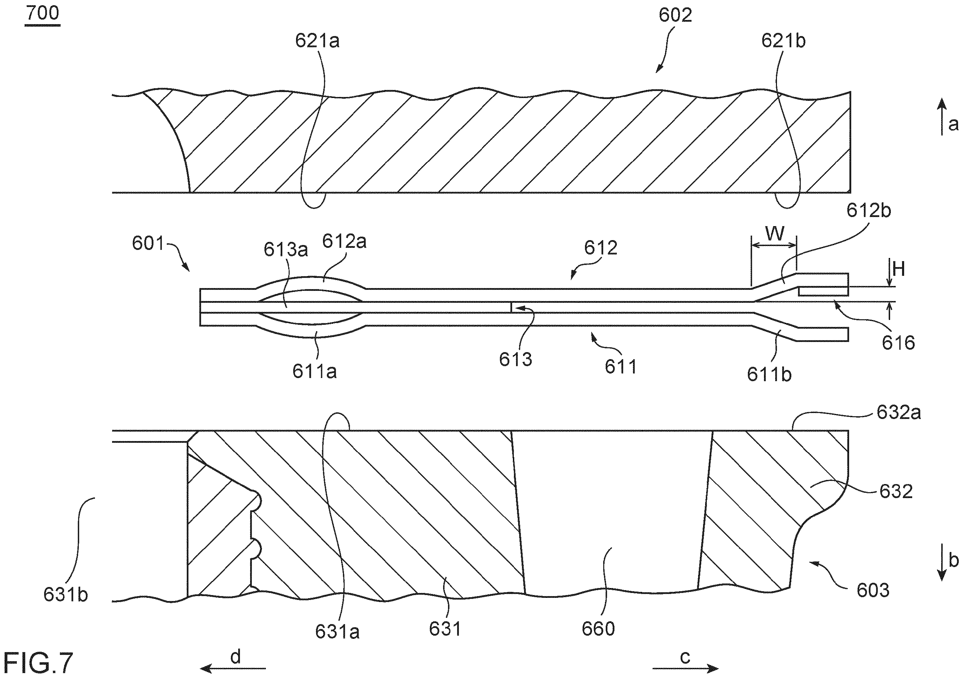

Fig. 6 is a schematic perspective view showing an internal combustion engine 700 with four cylinders that is provided with a gasket 601 according to a second embodiment of the present invention, the view showing a state in which a cylinder head 602 is removed, and Fig. 7 is a cross-sectional view showing a cross-section along a line A-A in Fig. 6, the view including the cylinder head 602 and a cylinder block 603.

Here, in the following description, an upper side or an upward direction (an arrow a direction in Figs. 6, 7) is a side or a direction where the cylinder head 602 is provided with respect to the internal combustion engine 700, and a lower side or a downward direction (an arrow b direction in Figs. 6, 7) is a side or a direction where the cylinder block 603 is provided with respect to the internal combustion engine 700. Furthermore, outer sides or outward directions (arrow c directions in Figs. 6, 7) are sides of, or directions toward, outer parts of the cylinder block 603 in an arrangement direction of bored holes 631b of the cylinder block 603 described later, and inner sides or inward directions (arrow d directions in Figs. 6, 7) are sides of, or directions toward, inner parts of the cylinder block 603 in the arrangement direction of the bored holes 631b.

As shown in Figs. 6, 7, the gasket 601 according to the second embodiment is attached between the cylinder head 602 and the cylinder block 603 of the internal combustion engine 700. The gasket 601 includes a lower base plate 611 that is flat plate-shaped and that is disposed on a side of the cylinder block 603, an upper base plate 612 that is flat plate-shaped and that is disposed on a side of the cylinder head 602, a shim plate 613 that is flat plate-shaped and that is disposed between the lower base plate 611 and the upper base plate 612, and stopper plates 616 that are flat plate-shaped, that are separate from the shim plate 613, and that are disposed between the lower base plate 611 and the upper base plate 612.

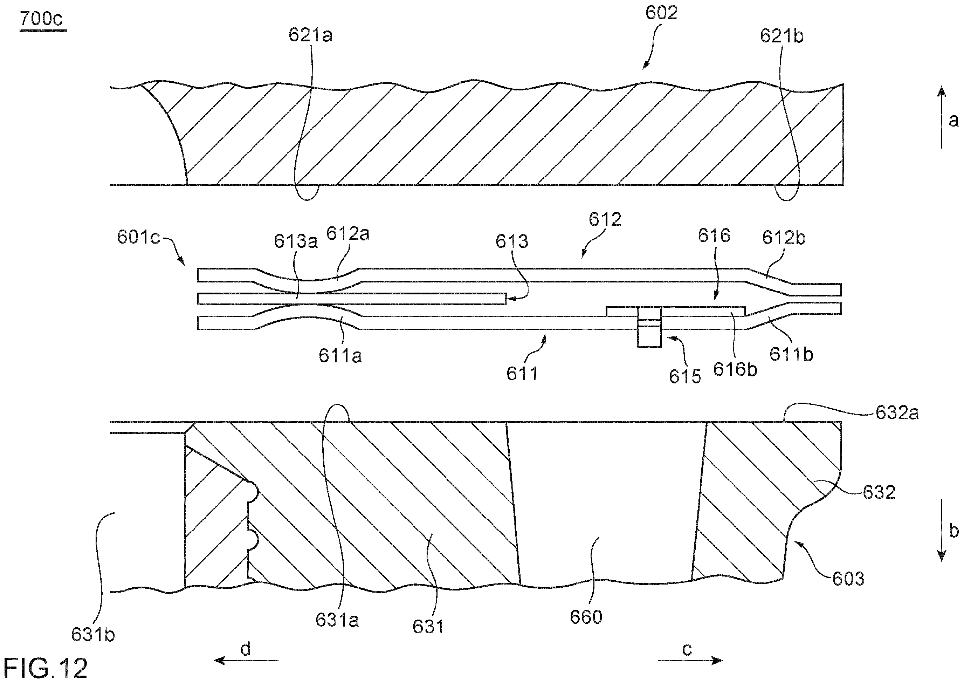

The lower base plate 611 includes cylinder-block-side full-bead sections 611a that are annular and that are formed to face deck surfaces 631a, which are annular, of each of the bore walls 631 of the cylinder block 603. Furthermore, as shown in Fig. 7, the lower base plate 611 includes cylinder-block-side cooling-water half-bead sections 611b that extend to face outer upper surfaces 632a of the cylinder block 603 described later. Specifically, the cylinder-block-side full-bead section 611a is formed in a direction protruding from the shim plate 613 (downward direction) so as to apply a predetermined surface pressure to the deck surface 631a of the cylinder block 603 in a usage state described later. Additionally, the cylinder-block-side full-bead section 611a may alternatively be formed in a direction of nearing the shim plate 613 (upward direction) so as to apply a predetermined surface pressure to the deck surface 631a in the usage state (see Fig. 12). Furthermore, the cylinder-block-side cooling-water half-bead section 611b is formed in a direction of protruding from the shim plate 613 (downward direction) so as to apply a predetermined surface pressure to the outer upper surface 632a of the cylinder block 603 in the usage state described later.

The upper base plate 612 includes cylinder-head-side full-bead sections 612a that are annular and that are formed to face cylinder head surfaces 621a, of the cylinder head 602, that are surfaces facing deck surfaces 631a respectively. Furthermore, the upper base plate 612 includes cylinder-head-side cooling-water half-bead sections 612b that extend to face outer lower surfaces 621b, of the cylinder head 602, that are surfaces that face the outer upper surfaces 632a. Specifically, the cylinder-head-side full-bead section 612a is formed in a direction protruding from the shim plate 613 (upward direction) so as to apply a predetermined surface pressure to the cylinder head surface 621a in the usage state described later. Additionally, the cylinder-head-side full-bead section 612a may alternatively be formed in a direction nearing the shim plate 613 (downward direction) so as to apply a predetermined surface pressure to the cylinder head surface 621a in the usage state (see Fig. 12). Furthermore, the cylinder-head-side cooling-water half-bead section 612b is formed in a direction protruding from the shim plate 613 (upward direction) so as to apply a predetermined surface pressure to the outer lower surface 621b of the cylinder head 602 in the usage state described later.

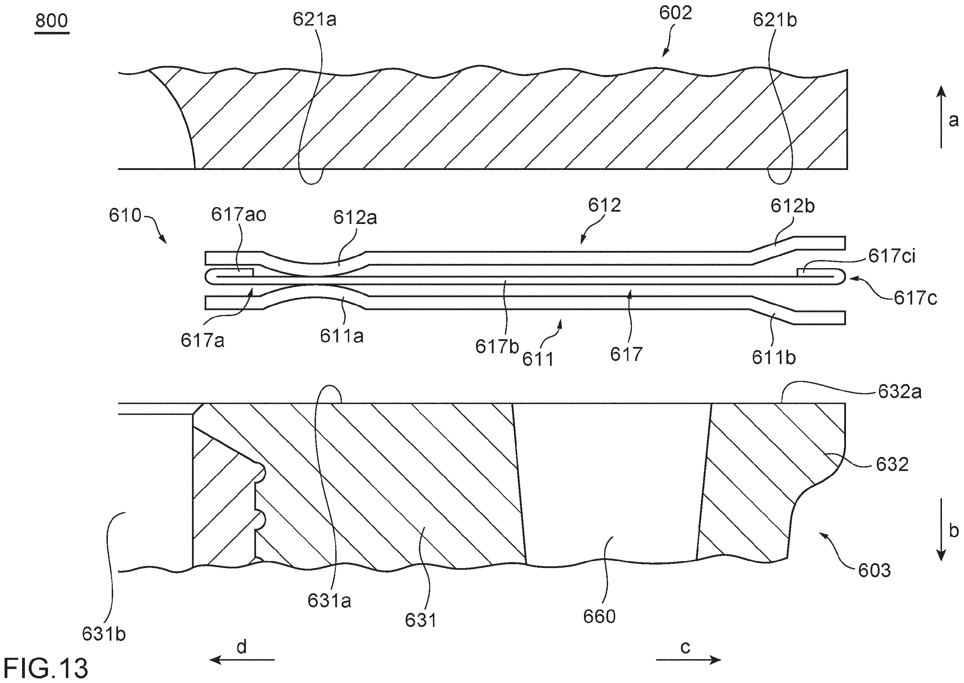

The shim plate 613 includes wedge sections 613a which are annular and are positioned between the cylinder-block-side full-bead section 611a and the cylinder-head-side full-bead section 612a respectively. In the usage state described later, each of the wedge sections 613a extends annularly along the cylinder head surface 621a and the deck surface 631a. Additionally, the shim plate 613 may include, at each of the wedge sections 613a, a folded wedge section that is obtained by folding back an end portion, at an inner periphery side, of the wedge section 613a surrounding each bored hole 631b (see a folded wedge section 617a in Fig. 13).

The stopper plates 616 are disposed separate from the shim plate 613, at positions, in an arrangement direction of the wedge sections 613a, which are positions facing the outer upper surfaces 632a of outer walls 632, of the cylinder block 603, defining cooling water channels 660 with the bore walls 631. A thickness of the stopper plate 616 may be the same or substantially the same as a thickness of the wedge section 613a or a thickness of the folded wedge section 617a (Fig. 13), or may be greater or smaller than the thickness of the wedge section 613a or the thickness of the folded wedge section 617a (Fig. 13).

As shown in Fig. 7, the stopper plate 616 is attached to at least one of the lower base plate 611 and the upper base plate 612, on a side that is further out than the cylinder-block-side cooling-water half-bead section 611b and the cylinder-head-side cooling-water half-bead section 612b. Specifically, the stopper plate 616 may be attached only to the upper base plate 612 as shown in Fig. 7, or may be attached only to the lower base plate 611, or may be attached to both the lower base plate 611 and the upper base plate 612. In the case in which the lower base plate 611 and the upper base plate 612 are to be subjected to after-coating, the stopper plate 616 is preferably fixed to the lower base plate 611 and the upper base plate 612 by spot welding or the like. Additionally, a fixing method of the stopper plate 616 to the lower base plate 611 and the upper base plate 612 in a case in which the lower base plate 611 and the upper base plate 612 are to be subjected to pre-coating will be described later.

After-coating here refers to coating the lower base plate 611 and the upper base plate 612 with elastic layers of a heat-resistant rubber-like elastic material (rubber material or synthetic resin material having rubber-like elasticity) after punching the lower base plate 611 and the upper base plate 612 into predetermined shapes and embossing the cylinder-block-side full-bead section 611a, the cylinder-head-side full-bead section 612a, the cylinder-block-side cooling-water half-bead section 611b, and the cylinder-head-side cooling-water half-bead section 612b on the lower base plate 611 and the upper base plate 612. Furthermore, pre-coating refers to coating the lower base plate 611 and the upper base plate 612 with the elastic layers in advance and punching the lower base plate 611 and the upper base plate 612 in this state into predetermined shapes, and then, embossing the cylinder-block-side full-bead section 611a, the cylinder-head-side full-bead section 612a, the cylinder-block-side cooling-water half-bead section 611b, and the cylinder-head-side cooling-water half-bead section 612b on the lower base plate 611 and the upper base plate 612.

Specifically, as shown in Fig. 7, the gasket 601 is formed in such a way that, in the usage state described later, the cylinder-block-side full-bead section 611a and the cylinder-head-side full-bead section 612a are sandwiched between the cylinder head surface 621a and the deck surface 631a along entire peripheries, and also, the cylinder-block-side cooling-water half-bead section 611b and the cylinder-head-side cooling-water half-bead section 612b are sandwiched between the outer lower surface 621b and the outer upper surface 632a along the entirety of the peripheries.

Specifically, as shown in Fig. 7, in the natural state in which no load is applied, the lower base plate 611 is a member having a plate shape with a constant or substantially constant thickness, extending from an end portion, located on an outer side, of the cylinder-block-side full-bead section 611a toward the outer wall 632 of the cylinder block 603, and bending and extending in a sloped manner at a position facing the outer upper surface 632a of the outer wall 632. The lower base plate 611 forms the cylinder-block-side cooling-water half-bead section 611b at the position facing the outer upper surface 632a. Furthermore, as shown in Fig. 6, a plurality of lower insertion holes 611c where bolts 640, 641, described later, are to be respectively inserted through are formed in the lower base plate 611. Additionally, as shown in Fig. 6, the bolts 640 are four end bolts which are arranged at both ends (outer sides) in the arrangement direction of the bored holes 631b, and the bolts 641 are six inner bolts that are arranged between the end bolts 640 in the arrangement direction of the bored hole 631b. Furthermore, a plurality of lower positioning holes 611d for positioning the stopper plates 616 with respect to the lower base plate 611 in an assembly step described later are formed in the lower base plate 611, in a manner penetrating the lower base plate 611 in the upward direction and downward direction. Additionally, the lower positioning holes 611d are merely examples, and protrusions that extend in the upward direction from the lower base plate 611 may be formed on the lower base plate 611, for positioning of the stopper plates 616 with respect to the lower base plate 11.

Specifically, as shown in Fig. 7, in the natural state in which no load is applied, the upper base plate 612 is a member having a plate shape with a constant or substantially constant thickness, extending from an end portion, located on an outer side, of the cylinder-head-side full-bead section 612a toward a side of the outer lower surface 621b of the cylinder head 602, and bending and extending in a sloped manner at a position facing the outer lower surface 621b of the cylinder head 602. The upper base plate 612 forms the cylinder-head-side cooling-water half-bead section 612b at the position facing the outer lower surface 621b. Furthermore, as shown in Fig. 6, a plurality of upper insertion holes 612c where the end bolts 640 and the inner bolts 641 are to be respectively inserted through are formed in the upper base plate 612. Furthermore, a plurality of upper positioning holes 612d for positioning the stopper plates 616 with respect to the upper base plate 612 in the assembly step described later are formed in the upper base plate 612, in a manner penetrating the upper base plate 612 in the upward and downward direction. Additionally, the upper positioning holes 612d are merely examples, and protrusions that extend downward from the upper base plate 612 may be formed on the upper base plate 612, for positioning of the stopper plates 616 with respect to the upper base plate 612. Furthermore, as shown in Fig. 7, the cylinder-block-side cooling-water half-bead section 611b and the cylinder-head-side cooling-water half-bead section 612b is formed in width W to be smaller, at a part where the stopper plate 616 is disposed, than a bead width (not shown) at a part where the stopper plate 616 is not disposed.

Specifically, as shown in Fig. 7, the stopper plate 616 preferably extends at the outer upper surface 632a of the cylinder block 603 without overlapping the cylinder-block-side cooling-water half-bead section 611b and the cylinder-head-side cooling-water half-bead section 612b. That is, the stopper plate 616 is formed not to be overlapped by the cylinder-block-side cooling-water half-bead section 611b and the cylinder-head-side cooling-water half-bead section 612b in the usage state of the gasket 601 described later. For example, as shown in Fig. 6, the stopper plate 616 may be a member having a substantially rectangular shape. Additionally, the shape of the stopper plate 616 is not limited to the above. In a usage state of the stopper plate 616 described later, a part of the stopper plate 616 may stick out from the outer upper surface 632a of the cylinder block 603. Furthermore, positioning holes 616a for positioning the stopper plate 616 with respect to the lower base plate 611 and the upper base plate 612 in the assembly step described later are formed in the stopper plate 616, in a manner penetrating the stopper plate 616 in both the upward and downward directions.

Next, effects of the gasket 601 according to the second embodiment will be described. As shown in Fig. 7, the gasket 601 is locked by a predetermined method (for example, by crimping) in an integrated manner in a superimposed state in which the shim plate 613 and the stopper plates 616 are sandwiched between the lower base plate 611 and the upper base plate 612. At this time, each of the wedge sections 613a of the shim plate 613 is disposed between the cylinder-block-side full-bead section 611a and the cylinder-head-side full-bead section 612a. Furthermore, each of the stopper plates 616 is disposed between the lower base plate 611 and the upper base plate 612, on an outer side of the cylinder-block-side cooling-water half-bead section 611b and the cylinder-head-side cooling-water half-bead section 612b, in a manner not overlapping the cylinder-block-side cooling-water half-bead section 611b and the cylinder-head-side cooling-water half-bead section 612b. For example, in the case in which the lower base plate 611 and the upper base plate 612 are to be subjected to after-coating, the stopper plate 616 is fixed to the upper base plate 612 by spot welding or the like in a state in which the upper positioning holes 612d of the upper base plate 612 and the positioning holes 616a of the stopper plate 616 are superimposed and the upper base plate 612 and the stopper plate 616 are positioned. Additionally, the stopper plate 616 may be fixed to the lower base plate 611 by spot welding or the like in a state in which the lower positioning holes 611d of the lower base plate 611 and the positioning holes 616a of the stopper plate 616 are superimposed and the lower base plate 611 and the stopper plate 616 are positioned.

The gasket 601 that is integrated in such a manner is placed on a predetermined position on the cylinder block 603. Specifically, as shown in Figs. 6, 7, the gasket 601 is placed on the cylinder block 603 in such a way that the cylinder-block-side cooling-water half-bead sections 611b are disposed on the outer upper surfaces 632a of the cylinder block 603, each cylinder-block-side full-bead section 611a is disposed on the respective deck surface 631a of the bore wall 631, and furthermore, each of the lower insertion holes 611c and the upper insertion holes 612c communicates with a respective bolt hole 633 formed in the outer upper surface 632a of the cylinder block 603. At this time, positioning of the cylinder head 602 and the gasket 601 with respect to the cylinder block 603 is performed by inserting dowel pins (not shown) in advance in two bolt holes 633d (see Fig. 6) among the bolt holes 633 of the cylinder block 603 and the dowel pins penetrating respective lower insertion holes 611cd and upper insertion holes 612cd corresponding to respective bolt holes 633d.

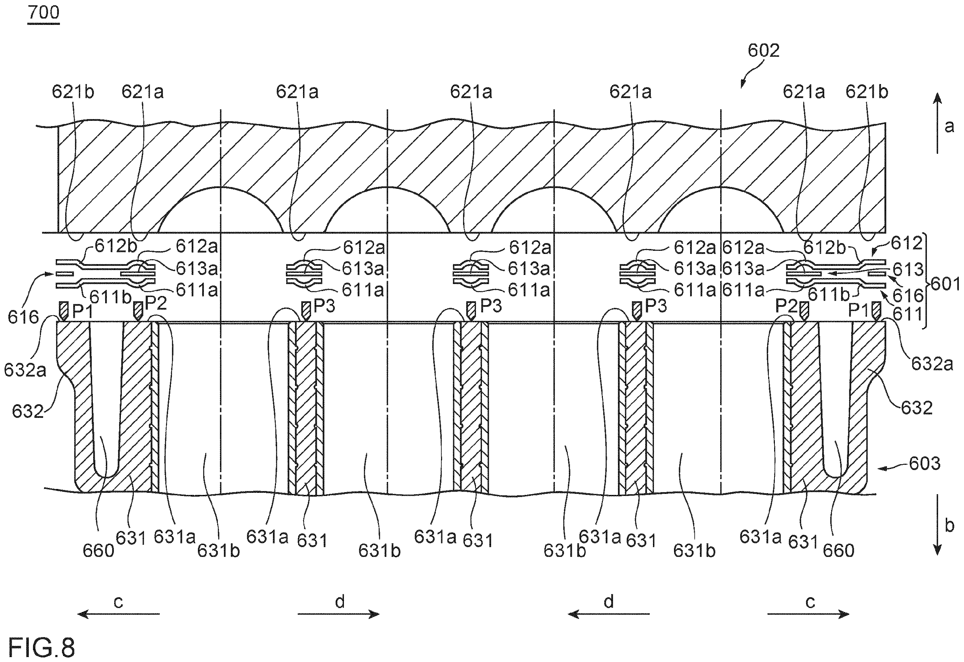

Now, Fig. 8 is a cross-sectional view showing a cross-section along a line B-B in Fig. 6, the view including the cylinder head 602 and the cylinder block 603. As described above, in the state in which the gasket 601 is placed on the cylinder block 603, each of the end bolts 640 and the inner bolts 641 is caused to penetrate a predetermined bolt hole, not shown in Fig. 6, provided in the cylinder head 602, the upper insertion hole 612c of the upper base plate 612, and the lower insertion hole 611c of the lower base plate 611, and is caused to be screwed in with an internal thread formed in the bolt hole 633 of the cylinder block 603. In this manner, the cylinder head 602 and the cylinder block 603 are fastened, the cylinder-head-side full-bead section 612a, the cylinder-block-side full-bead section 611a, and the wedge section 613a are elastically deformed between the cylinder head surface 621a and the deck surface 631a, and the cylinder-head-side cooling-water half-bead section 612b, the cylinder-block-side cooling-water half-bead section 611b, and the stopper plate 616 are elastically deformed between the outer upper surface 632a and the outer lower surface 621b, and a gap between the cylinder head 602 and the cylinder block 603 is thus filled to secure sealability.

In the case in which the end bolts 640 and the inner bolts 641 are fastened with the same torque as described above, a pressing deformation force (surface pressure) that is applied to the cylinder block 603 by the inner bolts 641 is mostly applied to parts corresponding to the deck surfaces 631a that are positioned on an inner side in the arrangement direction of the bored holes 631b (see P3 in Fig. 8). On the other hand, because the stopper plates 616 are disposed on the outer upper surfaces 632a of the cylinder block 603, a pressing deformation force (surface pressure) that is applied to the cylinder block 603 by the end bolts 640 is mostly applied to the deck surfaces 631a that are positioned at both ends (outer sides) in the arrangement direction of the bored holes 631b (see P2 in Fig. 8) and the outer upper surfaces 632a of the cylinder block 603 (see P1 in Fig. 8).

In this manner, by using the gasket 601, the pressing deformation forces P1 to P3 that are applied by the end bolts 640 and the inner bolts 641 are borne respectively by the deck surfaces 631a, the cylinder head surfaces 621a, the outer upper surfaces 632a, and the outer lower surfaces 621b. Accordingly, at the time of fastening of the cylinder head 602 and the cylinder block 603, uneven deformation of the cylinder head 602 in the arrangement direction of the bored holes 631b, which may cause a gap between the deck surface 631a and the cylinder head surface 621a receiving the pressing deformation force P3 from the inner bolt 641 to become greater than a gap between the deck surface 631a and the cylinder head surface 621a receiving the pressing deformation force P2 from the end bolt 640 and a gap between the outer upper surface 632a and the outer lower surface 621b receiving the pressing deformation force P1 from the end bolt 640, may be suppressed. Uniform sealing between the cylinder head 602 and the cylinder block 603 may be achieved in such a manner.

Furthermore, in the usage state of the gasket 601, each of the stopper plates 616 are disposed at positions facing each other in the arrangement direction of the wedge sections 613a, and thus, the pressing deformation forces P1 to P3 applied by the end bolts 640 and the inner bolts 641 are uniformly bearable, in the arrangement direction of the wedge sections 613a, by each of the deck surfaces 631a, each of the cylinder head surfaces 621a, each of the outer upper surfaces 632a, and each of the outer lower surfaces 621b. Accordingly, uneven deformation of the cylinder head 602 in the arrangement direction of the bored holes 631b is further capable of being suppressed, and uniform sealing is more capable of being achieved between the cylinder head 602 and the cylinder block 603.

Furthermore, each of the stopper plates 616 is disposed between the lower base plate 611 and the upper base plate 612 in a manner not overlapping the cylinder-block-side cooling-water half-bead section 611b and the cylinder-head-side cooling-water half-bead section 612b, therefore certain elastic deformation across the entire cylinder-block-side cooling-water half-bead section 611b and cylinder-head-side cooling-water half-bead section 612b may be secured, and appropriate sealing between the outer upper surface 632a of the cylinder block 603 and the outer lower surface 621b of the cylinder head 602 may be achieved.

Furthermore, the stopper plate 616 which is separate from the shim plate 613 is provided away from the shim plate 613, and the thickness of the stopper plate 616 may be changed according to the thickness of the wedge section 613a. This enables an amount of deflection of the cylinder 602 to be changed according to the thickness of the stopper plate 616, and the pressing deformation force (PI in Fig. 8) that is applied to the outer upper surface 632a of the cylinder block 603 by the end bolt 640 to thereby be reduced. Accordingly, excessive application of the pressing deformation force P1 from the end bolt 640 to the outer upper surface 632a of the cylinder block 603 may be suppressed, and deformation of the cylinder head 602 in the arrangement direction of the bored holes 631b, which may cause the gaps between the deck surfaces 631a and the cylinder head surfaces 621a to be uneven, may be suppressed, and uniform sealing between the cylinder head 602 and the cylinder block 603 may be achieved.

Furthermore, the cylinder-block-side cooling-water half-bead section 611b and the cylinder-head-side cooling-water half-bead section 612b is formed in width W to be smaller, at the part where the stopper plate 616 is disposed, than the bead width (not shown) at the part where the stopper plate 616 is not disposed, and thus, a bead height H (see Fig. 7) in the upward and downward directions at a part of the cylinder-block-side cooling-water half-bead section 611b and the cylinder-head-side cooling-water half-bead section 612b, where the stopper plate 616 is disposed may be formed to be greater than a bead height at a part where the stopper plate 616 is not disposed. Accordingly, in the usage state of the gasket 601, desired elastic deformation may be secured across the entire cylinder-block-side cooling-water half-bead section 611b and cylinder-head-side cooling-water half-bead section 612b, and appropriate sealing may be better achieved between the outer upper surface 632a of the cylinder block 603 and the outer lower surface 621b of the cylinder head 602.

In this manner, with the gasket 601 according to the second embodiment, deformation of the cylinder head 602 in the arrangement direction of the bored holes 631b, which may cause the gaps between the deck surfaces 631a and the cylinder head surfaces 621a to be uneven, may be suppressed, and uniform sealing between the cylinder head 602 and the cylinder block 603 may be achieved.

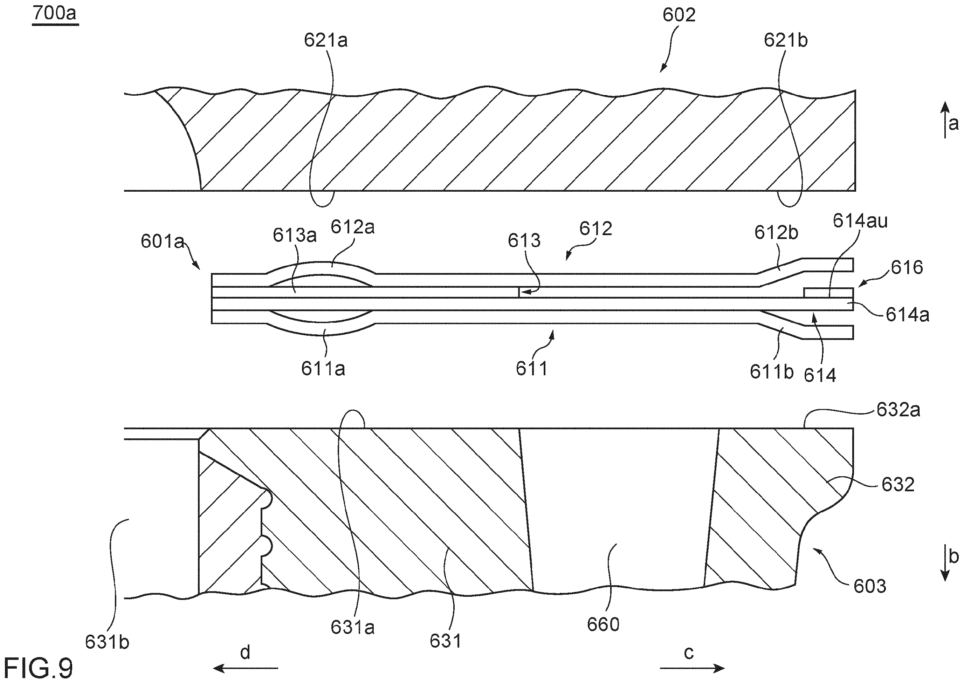

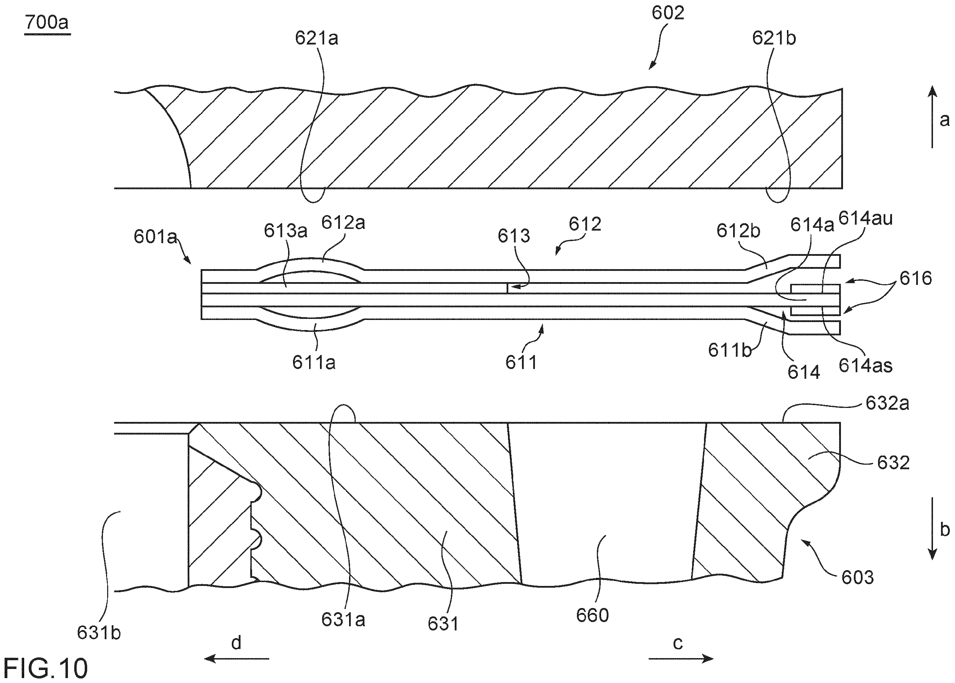

Next, a gasket 601a according to a variation of the second embodiment will be described with reference to Figs. 9 and 10. Figs. 9 and 10 are cross-sectional views showing a cross-section of an internal combustion engine 700a that is provided with the gasket 601a according to the variation of the second embodiment of the present invention, the views including the cylinder head 602 and the cylinder block 603. Additionally, in Figs. 9 and 10, parts corresponding to those in Figs. 6 to 8 are denoted by identical reference signs. Hereinafter, mainly differences from the second embodiment will be described.

The gasket 601a includes a middle plate 614 that is flat plate-shaped and that is disposed between the lower base plate 611 and the shim plate 613. Additionally, the middle plate 614 may alternatively be disposed between the upper base plate 612 and the shim plate 613. Furthermore, a thickness of the middle plate 614 may be greater, smaller, identical to or substantially identical to a thickness of the lower base plate 611 and the upper base plate 612. The middle plate 614 is a member that is formed into a substantially identical shape as the lower base plate 611 and the upper base plate 612, and includes, as appropriate, according to structures of the lower base plate 611 and the upper base plate 612, holes for bolts, not shown, corresponding to the lower insertion holes 611c and the upper insertion holes 612c, holes for oil, holes for cooling water, and so on. A structure of the middle plate 614 itself is already known, and a detailed description thereof is omitted.

The stopper plate 616 is attached to at least one of a side, of the middle plate 614, which is the side facing the upper base plate 612 and a side, of the middle plate 614, which is the side facing the lower base plate 611, on an outer side than the cylinder-block-side cooling-water half-bead section 611b and the cylinder-head-side cooling-water half-bead section 612b. Specifically, as shown in Fig. 9, the stopper plate 616 is fixed by spot welding or the like to a middle plate-upper surface 614au which is a surface, facing the upper side, at an outer edge section 614a which is an end portion, of the middle plate 614, on an outer side. Furthermore, as shown in Fig. 10, the stopper plate 616 may alternatively be fixed by spot welding or the like to both the middle plate-upper surface 614au and a middle plate-lower surface 614as which is a surface, facing the lower side, at the outer edge section 614a of the middle plate 614.

As described above, with the gasket 601a according to the variation of the second embodiment of the present invention, the middle plate 614 having a predetermined thickness is further provided in addition to the stopper plate 616, and thus, an appropriate thickness of the gasket 601a is capable of being secured according to the gap between the cylinder head 602 and the cylinder block 603. Accordingly, even in a case in which the gap between the cylinder head 602 and the cylinder block 603 is changed due to a change in shapes or the like of the cylinder head 602 and the cylinder block 603, deformation of the cylinder head 602 in the arrangement direction of the bored holes 631b, which may cause the gaps between the deck surfaces 631a and the cylinder head surfaces 621a to be uneven, is capable of being suppressed, and uniform sealing between the cylinder head 602 and the cylinder block 603 is achievable.

Furthermore, the stopper plates 616 are fixed to both of the middle plate-upper surface 614au and the middle plate-lower surface 614as, and thus, reduction in the pressing deformation force (PI in Fig. 8) that is applied to the outer upper surface 632a of the cylinder block 603 by the end bolt 640, or in other words, reduction in the pressing deformation force (PI in Fig. 8) that is applied to the cylinder-block-side cooling-water half-bead section 611b and the cylinder-head-side cooling-water half-bead section 612b, is achievable. Accordingly, excessive application of the pressing deformation force P1 by the end bolt 640 to the outer upper surface 632a of the cylinder block 603, or in other words, the cylinder-block-side cooling-water half-bead section 611b and the cylinder-head-side cooling-water half-bead section 612b, is capable of being suppressed. Accordingly, deformation of the cylinder head 602 in the arrangement direction of the bored holes 631b, which may cause the gaps between the deck surfaces 631a and the cylinder head surfaces 621a to be uneven, is capable of being suppressed, and uniform sealing between the cylinder head 602 and the cylinder block 603 is achievable.

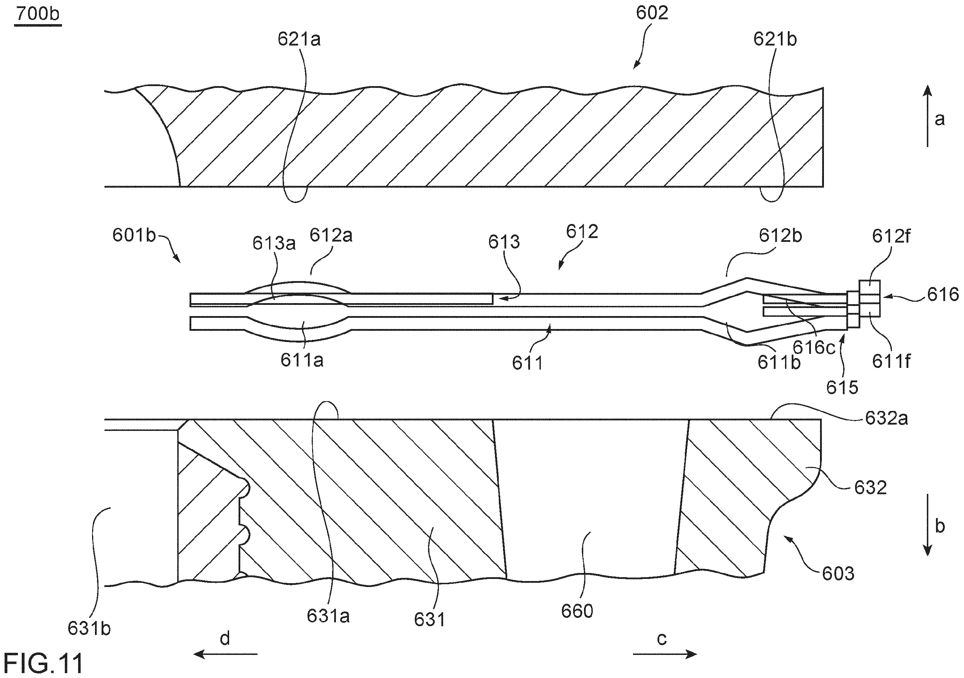

Next, a gasket 601b according to a further variation of the second embodiment of the present invention will be described with reference to Fig. 11. Fig. 11 is a cross-sectional view showing a cross-section of an internal combustion engine 700b that is provided with the gasket 601b according to the further variation of the second embodiment of the present invention, the view including the cylinder head 602 and the cylinder block 603. Additionally, in Fig. 11, parts corresponding to those in Figs. 6 to 8 are denoted by identical reference signs. Hereinafter, mainly differences from the second embodiment will be described.

The gasket 601b includes the stopper plate 616 that is fixed to the upper base plate 612 and the lower base plate 611 by a crimp 615, on an outer side other than that of the cylinder block 603 and the cylinder head 602.

Specifically, as shown in Fig. 11, the stopper plate 616 may be fixed by crimping at a lower crimping section 611f, of the lower base plate 611, that is positioned on an outer side than the cylinder-block-side cooling-water half-bead section 611b. Furthermore, the stopper plate 616 may be fixed by crimping at an upper crimping section 612f, of the upper base plate 612, which is positioned on an outer side further than the cylinder-head-side cooling-water half-bead section 612b. Moreover, the stopper plate 616 may be fixed by crimping at both the lower crimping section 611f and the upper crimping section 612f.

Specifically, as shown in Fig. 11, the stopper plate 616 is fixed in such a way that an inner edge section 616c that is an end portion, of the stopper plate 616, on an inner side does not reach the cylinder-block-side cooling-water half-bead section 611b and the cylinder-head-side cooling-water half-bead section 612b. That is, the stopper plate 616 is fixed, in the usage state of the gasket 601b, without being sandwiched between the cylinder-block-side cooling-water half-bead section 611b and the cylinder-head-side cooling-water half-bead section 612b.

As described above, with the gasket 601b according to the further variation of the second embodiment of the present invention, the stopper plate 616 is fixed to the upper base plate 612 and the lower base plate 611 by the crimp 615, on an outer side than the cylinder block 603 and the cylinder head 602, and thus, even in a case in which the upper base plate 612 and the lower base plate 611 are pre-coated, the stopper plate 616 can be fixed to the upper base plate 612 and the lower base plate 611. Furthermore, with the stopper plate 616, the inner edge section 616c of the stopper plate 616 is fixed in a manner that does not reach the cylinder-block-side cooling-water half-bead section 611b and the cylinder-head-side cooling-water half-bead section 612b, and thus, certain elastic deformation across the entire cylinder-block-side cooling-water half-bead section 611b and cylinder-head-side cooling-water half-bead section 612b can be secured, and even in a case in which the upper base plate 612 and the lower base plate 611 are pre-coated, uneven deformation of the cylinder head 602 in the arrangement direction of the bored holes 631b is capable of being suppressed, and uniform sealing between the cylinder head 602 and the cylinder block 603 is achievable.

Next, a gasket 601c according to a further variation of the second embodiment of the present invention will be described with reference to Fig. 12. Fig. 12 is a cross-sectional view showing a cross-section of an internal combustion engine 700c that is provided with the gasket 601c according to the further variation of the second embodiment of the present invention, the view including the cylinder head 602 and the cylinder block 603. Additionally, in Fig. 12, parts corresponding to those in Figs. 6 to 8 are denoted by identical reference signs. Hereinafter, mainly differences from the second embodiment will be described.

The gasket 601c includes the stopper plate 616 which is fixed to the lower base plate 611 by the crimp 615, at a position facing the cooling water channel 660. Specifically, as shown in Fig. 12, with the stopper plate 616, an outer edge section 616b that is an end portion, of the stopper plate 616, on an outer side is fixed in a manner not reaching the cylinder-block-side cooling-water half-bead section 611b. That is, the stopper plate 616 is fixed, when the gasket 601c is in use, without being sandwiched between the cylinder-block-side cooling-water half-bead section 611b and the cylinder-head-side cooling-water half-bead section 612b.

As described above, with the gasket 601c according to the further variation of the second embodiment of the present invention, the stopper plate 616 is fixed to the lower base plate 611 by the crimp 615 at a position facing the cooling water channel 660, and thus, even in a case in which the lower base plate 611 is pre-coated, the stopper plate 616 can be fixed to the lower base plate 611. Furthermore, the outer edge section 616b of the stopper plate 616 is fixed in a manner not reaching the cylinder-block-side cooling-water half-bead section 611b, and thus, certain elastic deformation across the entire cylinder-block-side cooling-water half-bead section 611b and cylinder-head-side cooling-water half-bead section 612b can be secured, and appropriate sealing is achievable between the outer upper surface 632a of the cylinder block 603 and the outer lower surface 621b of the cylinder head 602.

### <Third Embodiment>

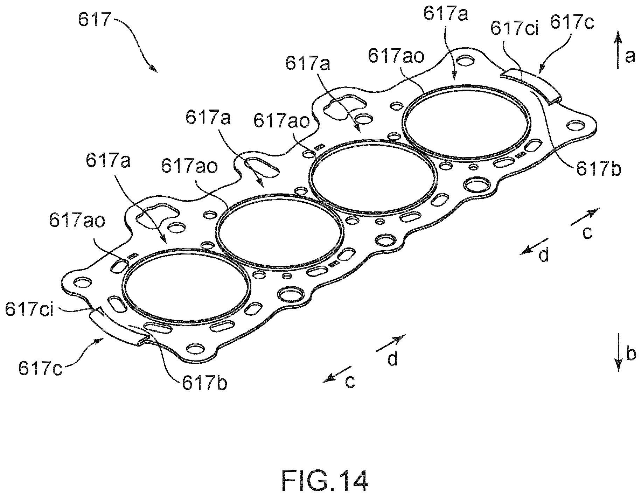

Fig. 13 is a cross-sectional view showing a cross-section of an internal combustion engine 800 that is provided with a gasket 610 according to a third embodiment of the present invention, the view including the cylinder head 602 and the cylinder block 603, and Fig. 14 is a perspective view showing a shim plate 617 of the gasket 610 according to the third embodiment of the present invention. Additionally, in Figs. 13 and 14, parts corresponding to those in Figs. 6 to 12 are denoted by same reference signs. Hereinafter, differences from the second embodiment will be mainly described.

As shown in Fig. 13, the shim plate 617 includes folded wedge sections 617a that are annular and located around the bored holes 631b that are defined by the bore walls 631, and extended shim plate sections 617b that are integrally formed with the folded wedge sections 617a, in a circumferential direction of the folded wedge sections 617a, in a manner extending to the outer upper surfaces 632a of the outer walls 632 of the cylinder block 603, which define the cooling water channels 660. The folded wedge sections 617a include parts that are positioned between the cylinder-block-side full-bead section 611a and the cylinder-head-side full-bead section 612a respectively. Furthermore, the extended shim plate sections 617b include outer folded stopper sections 617c that are obtained by folding back end portions at the outer sides in the arrangement direction of the folded wedge sections 617a (arrow c, d directions in Fig. 14). The outer folded stopper sections 617c are disposed between the outer upper surfaces 632a and the outer lower surfaces 621b, of the cylinder head 602, which are surfaces that face the outer upper surfaces 632a, on outer sides than the cylinder-block-side cooling-water half-bead sections 611b and the cylinder-head-side cooling-water half-bead sections 612b.

Specifically, the folded wedge sections 617a are parts that encircle the bored holes 631b, the folded wedge sections 617a being formed by folding back end portions, of the shim plate 617, which are positioned on inner periphery sides of the deck surfaces 631a. Furthermore, the extended shim plate sections 617b are parts that extend from the folded wedge sections 617a that are positioned on both ends in the arrangement direction of the folded wedge sections 617a (the arrow c, d directions in Fig. 14), to the outer upper surfaces 632a of the outer walls 632. A thickness of the outer folded stopper sections 617c is same or substantially same as a thickness of the folded wedge sections 617a.

The outer folded stopper sections 617c extend in such a manner that inner edge sections 617ci which are end portions, of the outer folded stopper sections 617c, on the inner sides do not overlap the cylinder-block-side cooling-water half-bead sections 611b and the cylinder-head-side cooling-water half-bead sections 612b. Furthermore, the folded wedge sections 617a extend in such a manner that outer edge sections 617ao which are end portions, of the folded wedge sections 617a, on the outer sides do not overlap the cylinder-block-side full-bead sections 611a and the cylinder-head-side full-bead sections 612a. Additionally, the shim plate 617 is a member that is formed to have a substantially same shape as the lower base plate 611 and the upper base plate 612, and includes, as appropriate, according to structures of the lower base plate 611 and the upper base plate 612, holes for bolts corresponding to the lower insertion holes 611c and the upper insertion holes 612c, holes for oil, holes for cooling water, and so on.

Next, effects of the gasket 610 according to the third embodiment will be described. As shown in Fig. 13, the gasket 610 is locked by a predetermined method (for example, by crimping) in an integrated manner in a superimposed state in which the shim plate 617 is sandwiched between the lower base plate 611 and the upper base plate 612. At this time, the shim plate 617 is disposed between the cylinder-block-side full-bead sections 611a and the cylinder-head-side full-bead sections 612a. Furthermore, the shim plate 617 is disposed between the lower base plate 611 and the upper base plate 612 in such a manner that each of the inner edge sections 617ci of the outer folded stopper sections 617c does not overlap the cylinder-block-side cooling-water half-bead section 611b and the cylinder-head-side cooling-water half-bead section 612b, and each of the outer edge sections 617ao of the folded wedge sections 617a does not overlap the cylinder-block-side full-bead section 611a and the cylinder-head-side full-bead section 612a.

The cylinder head 602 and the cylinder block 603 are fastened in a state in which the gasket 610 is placed on a predetermined position on the cylinder block 603, by using each of the end bolts 640 and the inner bolts 641. At this time, between the cylinder head surface 621a and the deck surface 631a, the cylinder-head-side full-bead section 612a and the cylinder-block-side full-bead section 611a are elastically deformed, and the folded wedge section 617a is also elastically deformed. Furthermore, between the outer upper surface 632a and the outer lower surface 621b, the cylinder-head-side cooling-water half-bead section 612b and the cylinder-block-side cooling-water half-bead section 611b are elastically deformed, and the outer folded stopper section 617c is also elastically deformed. In this manner, with the gasket 610, by forming so-called multiple seals between the cylinder head surface 621a and the deck surface 631a, and between the outer upper surface 632a and the outer lower surface 621b, gaps between the cylinder head 602 and the cylinder block 603 are filled to secure sealability.

In the case in which the end bolts 640 and the inner bolts 641 are fastened with the same torque, a pressing deformation force (surface pressure) that is applied to the cylinder block 603 by the inner bolts 641 is mostly applied to parts corresponding to the deck surfaces 631a that are positioned on the inner side in the arrangement direction of the bored holes 631b (see P3 in Fig. 8). On the other hand, the outer folded stopper sections 617c of the shim plate 617 are disposed between the outer upper surfaces 632a of the cylinder block 603 and the outer lower surfaces 621b of the cylinder head 602, and thus, a pressing deformation force (surface pressure) that is applied to the cylinder block 603 by the end bolts 640 is mostly applied to the deck surfaces 631a that are positioned at both ends (outer sides) in the arrangement direction of the bored holes 631b (see P2 in Fig. 8) and the outer upper surfaces 632a of the cylinder block 603 (see P1 in Fig. 8).

In this manner, by using the gasket 610, the pressing deformation forces P1 to P3 that are applied by the end bolts 640 and the inner bolts 641 are bearable respectively by the deck surfaces 631a, the cylinder head surfaces 621a, the outer upper surfaces 632a, and the outer lower surfaces 621b. Accordingly, at the time the cylinder head 602 and the cylinder block 603 are fastened, uneven deformation of the cylinder head 602 in the arrangement direction of the bored holes 631b, which may cause a gap between the deck surface 631a and the cylinder head surface 621a receiving the pressing deformation force P3 from the inner bolt 641 to become greater than a gap between the deck surface 631a and the cylinder head surface 621a receiving the pressing deformation force P2 from the end bolt 640 and a gap between the outer upper surface 632a and the outer lower surface 621b receiving the pressing deformation force P1 from the end bolt 640, is capable of being suppressed. Accordingly, uniform sealing between the cylinder head 602 and the cylinder block 603 is achievable.

Furthermore, each of the outer folded stopper sections 617c is disposed between the lower base plate 611 and the upper base plate 612 in a manner not overlapping the cylinder-block-side cooling-water half-bead section 611b and the cylinder-head-side cooling-water half-bead section 612b, and thus, certain elastic deformation across the entire cylinder-block-side cooling-water half-bead section 611b and cylinder-head-side cooling-water half-bead section 612b is capable of fastening, and appropriate sealing is achievable between the outer upper surface 632a of the cylinder block 603 and the outer lower surface 621b of the cylinder head 602.

As described above, with the gasket 610 according to the third embodiment, deformation of the cylinder head 602 in the arrangement direction of the bored holes 631b, which may cause gaps between the deck surfaces 631a and the cylinder head surfaces 621a to be uneven, is capable of being suppressed, and uniform sealing between the cylinder head 602 and the cylinder block 603 is achievable.

Next, other effects that can be obtained by the gaskets 601, 601a, 601b, 601c according to the second embodiment of the present invention, and by the gasket 610 according to the third embodiment will be described.

As shown in Fig. 8, with the gaskets 601, 601a, 601b, 601c according to the second embodiment, and the gasket 610 according to the third embodiment, the pressing deformation forces PI, P2 applied by the end bolts 640 are uniformly bearable by each of the deck surfaces 631a, each of the cylinder head surfaces 621a, each of the outer upper surfaces 632a, and each of the outer lower surfaces 621b, and thus, concentrated application of the pressing deformation forces PI, P2 by the end bolts 640 to the deck surfaces 631a of the bore walls 631 positioned on both ends in the arrangement direction of the bored holes 631b can be avoided. Accordingly, the deck surfaces 631a of the bore walls 631 positioned on both ends in the arrangement direction of the bored holes 631b is capable of being prevented from being tilted inward (arrow d directions) by the pressing deformation forces PI, P2 from the end bolts 640. Accordingly, inner diameters of the bored holes 631b can be maintained uniform in the upward and downward directions, and an increase in friction between the pistons sliding inside the bored holes 631b and the bore walls 631 can be suppressed.

Furthermore, with the gaskets 601, 601a, 601b, 601c according to the second embodiment, and the gasket 610 according to the third embodiment, deformation of the cylinder head 602 in the arrangement direction of the bored holes 631b, which may cause the gaps between the deck surfaces 631a and the cylinder head surfaces 621a to be uneven, is capable of being suppressed, and thus, coaxiality can be secured for a plurality of insertion holes for camshafts, not shown, formed in the cylinder head 602. Accordingly, an increase in sliding resistance in driving the camshafts can be suppressed.

Heretofore, the first embodiment, the second embodiment, and the third embodiment of the present invention have been described, however, the present invention is not limited to the gaskets 1, 1a, 1b according to the first embodiment, the gaskets 601, 601a, 601b, 601c according to the second embodiment, and the gasket 610 according to the third embodiment, and may include any mode within the concept of the present invention and the scope of the claims. Furthermore, structures may be selectively combined as appropriate to achieve at least one of the objects and effects described above. The shape, material, arrangement, size and the like of each structural element in the embodiments described above may be changed as appropriate according to a specific usage mode of the present invention.

### List of Reference Signs

- 1, 1a, 1b, 400, 601, 601a, 601b, 601c, 610: gasket,
- 11, 420, 611: lower base plate,
- 11a, 421, 611a: cylinder-block-side full-bead section,
- 11b,611b: cylinder-block-side cooling-water half-bead section,
- 11c, 11cd, 611c, 611cd: lower insertion hole,
- 12, 410, 612: upper base plate,
- 12a, 411, 612a: cylinder-head-side full-bead section,
- 12b, 612b: cylinder-head-side cooling-water half-bead section,
- 12c, 12cd, 612c, 612cd: upper insertion hole,
- 13, 430, 613, 617: shim plate,
- 13a, 431, 613a: wedge section,
- 13ae, 14a: edge section,
- 13b, 13c: extended wedge section,
- 13ca: inner flat plate section,
- 13cb: outer flat plate section,
- 13cc: step section,
- 14, 614: middle plate,
- 15 spot: welding,
- 2, 200, 602: cylinder head,
- 21a, 211, 621a: cylinder head surface,
- 21b, 621b: outer lower surface,
- 3, 300, 603: cylinder block,
- 31, 310, 631: bore wall,
- 31a, 311, 631a: deck surface,
- 31b, 320, 631b: bored hole,
- 32, 632: outer wall,
- 32a, 632a: outer upper surface,
- 33, 33d, 633, 633d: bolt hole,
- 40, 500, 640: end bolt,
- 41, 501, 641: inner bolt,
- 60, 660: cooling water channel,
- 70, 70a, 70b, 100, 700, 700a, 700b, 700c, 800: internal combustion engine,
- 210: base,
- 611d: lower positioning hole,
- 611f: lower crimping section,
- 612d: upper positioning hole,
- 612f: upper crimping section,
- 614a: outer edge section,
- 614au: middle plate-upper surface,
- 614as: middle plate-lower surface,
- 615: crimp,
- 616: stopper plate,
- 616a: positioning hole,
- 616b, 617ao: outer edge section,
- 616c, 617ci: inner edge section,
- 617a: folded wedge section,
- 617b: extended shim plate section,
- 617c: outer folded stopper section,
- a: upper side, upward direction,
- b lower: side, downward direction,
- c outer: side, outward direction,
- d inner: side, inward direction,
- H: bead height,
- P1 to P3: pressing deformation force (surface pressure),
- W: bead width

## Claims

1. A gasket to be attached between a cylinder head and a cylinder block of an internal combustion engine, the gasket being **characterized by** comprising:
a lower base plate being flat plate-shaped and disposed on a side of the cylinder block;
an upper base plate being flat plate-shaped and disposed on a side of the cylinder head; and
a shim plate being flat plate-shaped and disposed between the lower base plate and the upper base plate,
wherein
the lower base plate includes cylinder-block-side full-bead sections being annular and corresponding to each of the annular deck surfaces of each bore wall of the cylinder block,
the upper base plate includes cylinder-head-side full-bead sections being annular, facing the cylinder-block-side full-bead sections, and corresponding to each of the cylinder head surfaces, of the cylinder head, facing each deck surface,
the shim plate includes wedge sections being annular, disposed between the cylinder-block-side full-bead sections and the cylinder-head-side full-bead sections respectively, and extending along the cylinder head surfaces, and
the shim plate includes extended wedge sections formed extending from parts, in a circumferential direction, of the wedge sections positioned on both ends in an arrangement direction of the wedge sections, to outer upper surfaces of outer walls of the cylinder block, which are surfaces defining cooling water channels with the bore walls.

2. The gasket according to claim 1, **characterized in that** each of the extended wedge sections extend in opposite directions from each other in the arrangement direction of the wedge sections.

3. The gasket according to claim 1 or 2, **characterized in that**
the lower base plate includes cylinder-block-side cooling-water half-bead sections corresponding to the outer upper surfaces of the cylinder block,
the upper base plate includes cylinder-head-side cooling-water half-bead sections facing the cylinder-block-side cooling-water half-bead sections, and corresponding to outer lower surfaces of the cylinder head that are surfaces facing the outer upper surfaces, and
the extended wedge sections are formed so that they do not reach the cylinder-block-side cooling-water half-bead sections and the cylinder-head-side cooling-water half-bead sections.

4. The gasket according to claim 3, **characterized in that** a bead height in the upward direction and downward direction at certain part, of the cylinder-block-side cooling-water half-bead sections and the cylinder-head-side cooling-water half-bead sections, where the extended wedge sections are disposed is greater than a bead height at parts where the extended wedge sections are not disposed.

5. The gasket according to any one of claims 1 to 4, **characterized in that** the extended wedge sections are integrally formed with the wedge sections.

6. The gasket according to any one of claims 1 to 5, **characterized by** further comprising a middle plate being flat plate-shaped and disposed between the lower base plate and the shim plate.

7. The gasket according to any one of claims 1 to 4, **characterized in that**
the extended wedge sections are separate from the wedge sections, and
the extended wedge sections have a thickness that is different from the thickness of the wedge sections.

8. A gasket to be attached between a cylinder head and a cylinder block of an internal combustion engine, the gasket being **characterized by** comprising:
a lower base plate being flat plate-shaped and disposed on a side of the cylinder block;
an upper base plate being flat plate-shaped and disposed on a side of the cylinder head;
a shim plate being flat plate-shaped and disposed between the lower base plate and the upper base plate; and
stopper plates being separate from the shim plate, and disposed between the lower base plate and the upper base plate,
wherein
the lower base plate includes cylinder-block-side full-bead sections being annular and formed to face annular deck surfaces of each bore wall of the cylinder block,
the upper base plate includes cylinder-head-side full-bead sections that are annular and formed to face cylinder head surfaces, of the cylinder head, which are surfaces facing each deck surface,
the shim plate includes wedge sections that are annular and positioned between the cylinder-block-side full-bead sections and the cylinder-head-side full-bead sections respectively, and
the stopper plates are disposed away from the shim plate, at positions facing each other in an arrangement direction of the wedge sections on outer upper surfaces of outer walls, of the cylinder block, which are surfaces defining cooling water channels with the bore walls.

9. The gasket according to claim 8, **characterized in that**
the lower base plate includes cylinder-block-side cooling-water half-bead sections extending in a manner facing the outer upper surfaces of the cylinder block,
the upper base plate includes cylinder-head-side cooling-water half-bead sections extending in a manner facing outer lower surfaces of the cylinder head, which are surfaces facing the outer upper surfaces, and
the stopper plates are attached to at least one of the lower base plate and the upper base plate, on sides further out than the cylinder-block-side cooling-water half-bead sections and the cylinder-head-side cooling-water half-bead sections.

10. The gasket according to claim 8, **characterized by** further comprising a middle plate being flat plate-shaped and disposed between the lower base plate and the shim plate, wherein
the lower base plate includes cylinder-block-side cooling-water half-bead sections extending in a manner facing the outer upper surfaces of the cylinder block,
the upper base plate includes cylinder-head-side cooling-water half-bead sections extending in a manner facing outer lower surfaces, of the cylinder head, which are surfaces facing the outer upper surfaces, and
the stopper plates are attached to at least one of a side, of the middle plate, facing the upper base plate and a side, of the middle plate, facing the lower base plate, on sides further out than the cylinder-block-side cooling-water half-bead sections and the cylinder-head-side cooling-water half-bead sections.

11. The gasket according to claim 8, **characterized in that**
the lower base plate includes cylinder-block-side cooling-water half-bead sections extending in a manner facing the outer upper surfaces of the cylinder block,
the upper base plate includes cylinder-head-side cooling-water half-bead sections extending in a manner facing outer lower surfaces of the cylinder head, which are surfaces facing the outer upper surfaces, and
the stopper plates are fixed to the upper base plate and the lower base plate by crimping, on sides further out than the cylinder block and the cylinder head.

12. The gasket according to claim 8, **characterized in that**
the lower base plate includes cylinder-block-side cooling-water half-bead sections extending in a manner facing the outer upper surfaces of the cylinder block,
the upper base plate includes cylinder-head-side cooling-water half-bead sections extending in a manner facing outer lower surfaces, of the cylinder head, which are surfaces facing the outer upper surfaces, and
the stopper plates are fixed to the lower base plate by crimping, at positions facing the cooling water channels.

13. A gasket to be attached between a cylinder head and a cylinder block of an internal combustion engine, the gasket being **characterized by** comprising:
a lower base plate being flat plate-shaped and disposed on a side of the cylinder block;
an upper base plate being flat plate-shaped and disposed on a side of the cylinder head; and
a shim plate being flat plate-shaped and disposed between the lower base plate and the upper base plate,
wherein
the lower base plate includes cylinder-block-side full-bead sections being annular and formed to face annular deck surfaces of each bore wall of the cylinder block,
the upper base plate includes cylinder-head-side full-bead sections being annular and formed to face cylinder head surfaces of the cylinder head, which are surfaces facing each deck surface,
the shim plate includes folded wedge sections being annular, and located around bored holes defined by the bore walls, and extended shim plate sections being integrally formed with the folded wedge sections, in a circumferential direction of the folded wedge sections, in a manner extending to the outer upper surfaces of outer walls, of the cylinder block, which are surfaces defining cooling water channels,
the folded wedge sections include parts positioned between each of the cylinder-block-side full-bead sections and the cylinder-head-side full-bead sections, and
the extended shim plate sections include outer folded stopper sections being folded back at the outer side end portions in the direction the folded wedge sections are arranged.

14. The gasket according to claim 13, **characterized in that**
the lower base plate includes cylinder-block-side cooling-water half-bead sections extending in a manner facing the outer upper surfaces of the cylinder block,
the upper base plate includes cylinder-head-side cooling-water half-bead sections extending in a manner facing outer lower surfaces, of the cylinder head, which are surfaces facing the outer upper surfaces, and
the outer folded stopper sections are disposed between the outer upper surfaces and the outer lower surfaces of the cylinder head, that are surfaces facing the outer upper surfaces, on sides further out than the cylinder-block-side cooling-water half-bead sections and the cylinder-head-side cooling-water half-bead sections.
